Europäisches Patentamt

European Patent Office

Office européen des brevets

(19)

(11)  **EP 1 631 109 A1**

(12)  # EUROPEAN PATENT APPLICATION
published in accordance with Art. 158(3) EPC

(43) Date of publication:
**01.03.2006 Bulletin 2006/09**

(51) Int Cl.:
*H04Q 7/38* (1995.01)    *H04J 13/00* (1974.07)
*H04L 12/28* (1990.01)

(21) Application number: **04735811.4**

(22) Date of filing: **02.06.2004**

(86) International application number:
**PCT/JP2004/008003**

(87) International publication number:
**WO 2004/110091 (16.12.2004 Gazette 2004/51)**

(84) Designated Contracting States:
**AT BE BG CH CY CZ DE DK EE ES FI FR GB GR HU IE IT LI LU MC NL PL PT RO SE SI SK TR**

(30) Priority: **05.06.2003 JP 2003160576**
**19.08.2003 JP 2003295311**
**22.09.2003 JP 2003329765**
**24.09.2003 JP 2003331648**
**24.02.2004 JP 2004047574**
**19.05.2004 JP 2004148914**

(71) Applicants:
• **Keio University**
  **Tokyo 108-8345 (JP)**
• **Multimedia Research Institute Corp.,**
  **Tokyo 102-0093 (JP)**

(72) Inventors:
• **NAKAGAWA, Masao**
  **Keio University Fac./Science & Tec**
  **Yokohama-shi, Kanagawa 223-8522 (JP)**

• **ESMAILZADEH, Riaz**
  **Keio University Fac./Scienc &Tec**
  **Yokohama-shi, Kanagawa 223-8522 (JP)**
• **HAAS, Harald**
  **28755 (DE)**
• **JEONG, Incheol**
  **151881 Seoul (KR)**
• **LI, Rongqing**
  **Keio University Fac.of Science & Tech**
  **Yokohama-shi, Kanagawa 223-8522 (JP)**
• **OZEKI, Tomoo**
  **1850023 (JP)**

(74) Representative: **Klingseisen, Franz et al**
**Zumstein & Klingseisen**
**Patentanwälte**
**Postfach 10 15 61**
**80089 München (DE)**

(54) **RADIO COMMUNICATION APPARATUS, RADIO COMMUNICATION METHOD, COMMUNICATION CHANNEL ASSIGNING METHOD AND ASSIGNING APPARATUS**

(57)    A radio communication apparatus having a function for allowing it to be connected both to an ad hoc network and to a mobile communication network, yet having a structure that is not complicated with cost increases suppressed, and yet being capable of smoothly switching between the networks. The radio communication apparatus (10) uses a TDD-CDMA system for communication with a base station of the mobile communication network, and comprises ad hoc communication means for performing a radio communication with another neighboring radio communication apparatus by making an ad hoc network in conjunction with the other radio communication apparatus. This ad hoc communication means, when communicating with the other radio communication apparatus , uses the TDD-CDMA system common to the mobile communication network.

FIG.1

**Description**

Technical Field

The present invention relates to a radio communication apparatus capable of connecting to both of an ad-hoc network and a mobile communication network, a radio communication method using the mobile communication apparatus, a method for assigning a communication channel to be used within the ad-hoc network, and a communication channel assignment apparatus.

Background Art

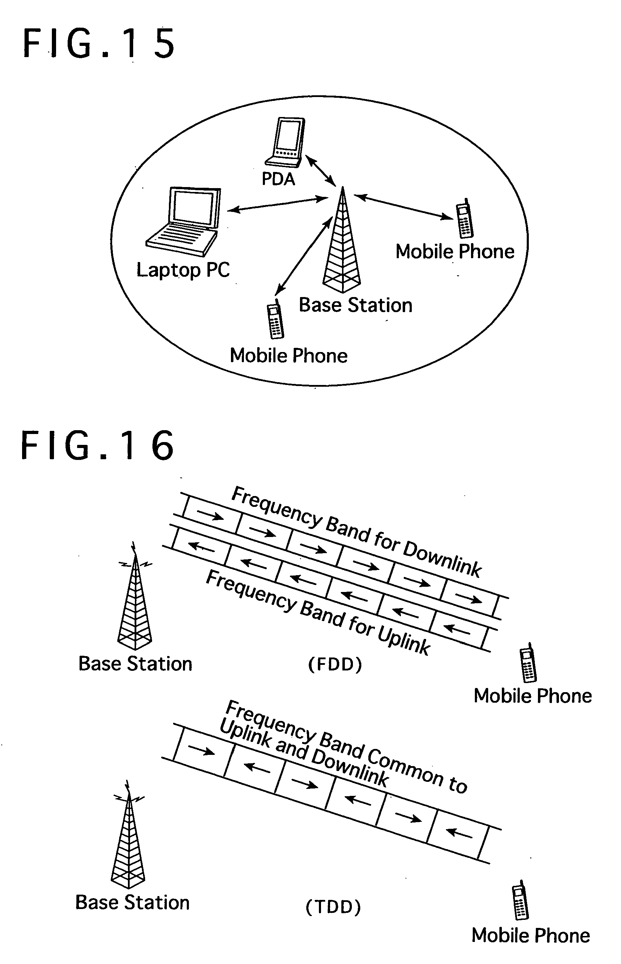

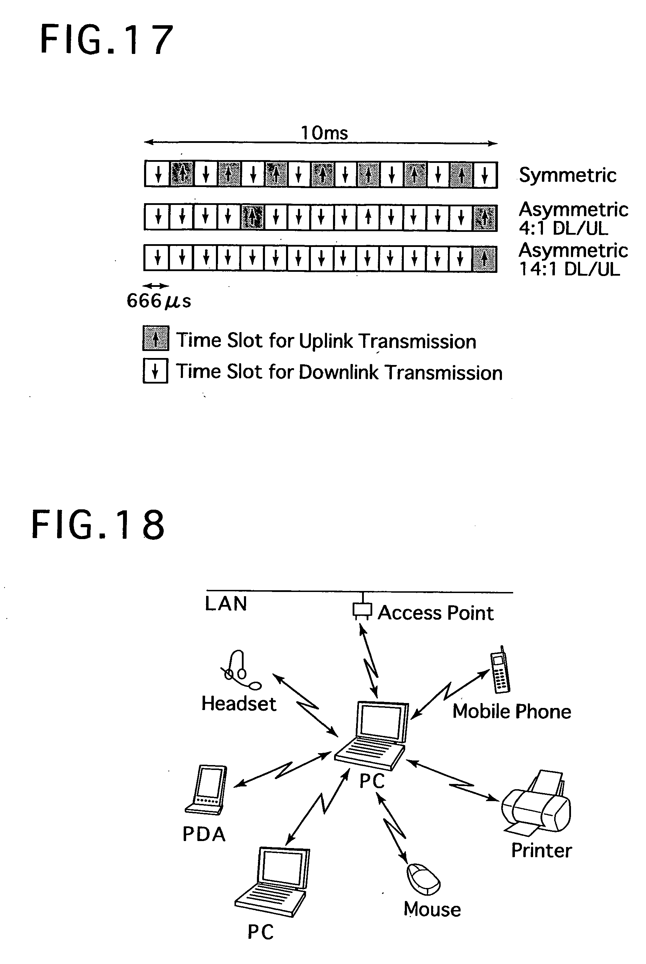

As well known, in a mobile communication network, a mobile station is configured by a radio communication apparatus such as a mobile phone, a personal computer and a PDA, and data transmission between such a mobile station and a base station is wirelessly performed. In the case of making a voice call or performing data communication between mobile stations, data is exchanged via a base station as shown in FIG. 15. As telecommunication system to be used for such mobile communication, for example, GSM (Global System for Mobile Communications), WCDMA (Wideband Code Division Multiple Access) and the like are known.
In the mobile communication network, communication between a mobile station and a base station is bidirectional, and the communication mode is a duplex mode in which transmitting and receiving are performed at the same time. As shown in FIG. 16, the duplex mode includes the following types: an FDD (Frequency Division Duplex) mode in which different frequency bands are used for the uplink from the mobile station to the base station and the downlink from the base station to the mobile station, respectively, and a TDD (Time Division Duplex) mode in which, though the same frequency band is used for the uplink and the downlink, the uplink and the downlink are switched in a very short time. In the TDD mode, one frame is divided into multiple (for example, fifteen) time slots, and any of the uplink and the down link is assigned to each of the time slots. FIG. 17 shows frame configuration of TDD-CDMA (Code Division Multiple Access) in which the TDD mode is adopted as a duplex mode. In this TDD-CDMA system, it is possible to change the ratio and arrangement of time slots to be assigned to the uplink and the downlink as appropriate, based on the amount of traffic and the like.
An ad-hoc network is known, as a short-distance radio data communication network. In this ad-hoc network, it is possible for radio communication apparatuses existing within a range where radio waves reach to directly communicate with each other not via a base station, as shown in FIG. 18. Therefore, according to the ad-hoc network, an advantage is obtained that a base station or an access point is not required, and a network can be simply constructed even where such communication infrastructure is not provided. As communication technologies for constructing such an ad-hoc network, there are proposed Bluetooth, Wireless LAN (IEEE802.11x) and the like, for example.
However, conventionally, different telecommunication systems are adopted for the ad-hoc network and the mobile communication network, and therefore, when it is attempted to realize a radio communication apparatus capable of connecting to both of the networks, there is a problem that the configuration of the radio communication apparatus is naturally complicated, and the cost increases accordingly.
Furthermore, when a connection destination is switched from one network (for example, the ad-hoc network) to the other network (for example, the mobile communication network), there is a problem that much time is required for handover because their telecommunication systems are different from each other.

Disclosure of the Invention

The present invention has been made in consideration of the above situations. Its first object is to provide a radio communication apparatus capable of avoiding increase in cost due to not being complicated in the apparatus configuration in spite of having a function of connecting to both of an ad-hoc network and a mobile communication network, and furthermore capable of smoothly switching a network to be connected, and a radio communication method using the radio communication apparatus.
A second object of the present invention is to provide a radio communication apparatus capable of avoiding corruption of the orthogonality of spreading codes even in the case of adopting a common TDD-CDMA system and using the same frequency band for communication in an ad-hoc network and in a mobile communication network.
A third object of the present invention is to provide a radio communication apparatus capable of, even in the case of adopting a common TDD-CDMA system using the same frequency band for communication in an ad-hoc network and in a mobile communication network, preventing mutual interference between the networks from being caused as much as possible.
A fourth object of the present invention is to provide a radio communication apparatus capable of, even in the case of adopting a common TDD-CDMA system and using the same frequency band for communication in an ad-hoc network and in a mobile communication network, suppressing deterioration of receiving characteristics due to interference signals and avoiding decrease in communication capacity of the entire network.

A fifth object of the present invention is to provide a communication channel assignment method and a communication channel assignment apparatus capable of, even in the case of adopting a common TDD-CDMA system and using the same frequency band for communication in an ad-hoc network and in a mobile communication network, suppressing mutual interference between both networks and thereby securing favorable communication condition, as well as avoiding decrease in throughput or communication capacity, and a radio communication apparatus using the communication channel assignment apparatus.

[First aspect of the present invention]

In order to achieve the above-described first object, a first aspect of the present invention is, as described in claim 1, a radio communication apparatus (for example, a first radio communication apparatus 10) which uses a TDD-CDMA system for communication with a base station in a mobile communication network, the radio communication apparatus being characterized in comprising: ad-hoc communication means for constructing an ad-hoc network with other radio communication apparatuses existing therearound (for example, other first radio communication apparatuses 10 and second radio communication apparatuses 20) to wirelessly communicate with the aforementioned other radio communication apparatuses; wherein the ad-hoc communication means uses a TDD-CDMA system common to the mobile communication network when communicating with the aforementioned other radio communication apparatuses.

Here, TDD-CDMA is CDMA which uses a TDD mode as a duplex mode. CDMA is one of multiple access systems to which a spread-spectrum system is applied, and is a telecommunication system referred to as Code Division Multiple Access. CDMA includes a single-carrier mode in which transmission is performed by means of a single carrier wave and a multi-carrier mode in which multiple carrier waves are used in order to reduce influence of fading. Specifically, TD-CDMA standardized by the 3GPP (3rd Generation Partnership Project), for example, is given as an example of TDD-CDMA.

As the "radio communication apparatus which uses a TDD-CDMA system for communication with a base station in a mobile communication network", there are information devices such as a mobile phone, a PDA (Personal Digital Assistance) and a personal computer having a function of connecting to a mobile communication network, for example.

As the "radio communication apparatuses existing therearound", there are included, for example, information devices which may not have a function of connecting to a mobile communication network (such as a computer and a PDA) and peripheral equipment of the information devices (for example, a headset, a printer, a mouse and a display) in addition to the above-described radio communication apparatuses having a function of connecting to a mobile communication network. These radio communication apparatuses have a function of constructing an ad-hoc network together with other radio communication apparatuses existing at least within a range in which radio waves reach and communicating with the radio communication apparatuses within the ad-hoc network (hereinafter referred to as an ad-hoc communication function) .

For example, as shown in claim 2, the ad-hoc communication means can be configured to perform processing for detecting radio communication apparatuses therearound which are capable of constructing the ad-hoc network, acquiring from each of the radio communication apparatuses information thereabout, and storing the information in storage means, then obtain information about an intended radio communication apparatus from among the information stored in the storage means, and communicate with the intended radio communication apparatus within the ad-hoc network based on the obtained information.

The information about a radio communication apparatus includes a spreading code to be used by each radio communication apparatus when performing transmitting, an identification code (ID) of each radio communication apparatus, attribute information about each radio communication apparatus (the type, performance, security level and the like of the apparatus), information about a communication path to each radio communication apparatus, and the like.

As shown in claim 3, it is preferable that the ad-hoc communication means measures an interference level based on a receive signal and performs transmit power control based on the measured value.

As shown in claim 4, the ad-hoc communication means may perform communication within the ad-hoc network with the use of time slots specified for the downlink transmission of the mobile communication.

In order to achieve the above-described first object, the radio communication method according to the first aspect of the present invention is, as shown in claim 5, a radio communication method used in constructing an ad-hoc network by multiple radio communication apparatuses, the radio communication method being characterized in: adopting a TDD-CDMA system common to communication in a mobile communication network and using the same frequency band as that of the mobile communication network, for communication within the ad-hoc network.

Here, the multiple radio communication apparatuses also include radio communication apparatuses which do not have the function of connecting to a mobile communication network but have the ad-hoc communication function.

According to the first aspect of the present invention, a common TDD-CDMA system is used for communication in the ad-hoc network and in the mobile communication network, so that it is possible to provide a radio communication apparatus capable of connecting to both of the ad-hoc network and the mobile communication network, in a simple configuration and at a low cost. Furthermore, according to the radio communication apparatus, it is possible to smoothly perform network handover.

Furthermore, by the radio communication apparatuses in the ad-hoc network mutually communicating with one another, the load imposed on the mobile communication network can be reduced, and thereby, it is possible to enhance the communication efficiency of the entire network and increase the network capacity.

Furthermore, when radio waves do not reach the base station, another radio communication apparatus within the ad-hoc network the radio waves of which reach the base station can be utilized as a relay apparatus, and consequently, the area in which connection to the mobile communication network is possible is enlarged.

[Second aspect of the present invention]

In order to achieve the above-described second object, a radio communication apparatus according to a second aspect of the present invention is, as shown in claim 6, a radio communication apparatus which uses a TDD-CDMA system for communication with a base station in a mobile communication network, the radio communication apparatus being characterized in comprising: ad-hoc communication means for constructing an ad-hoc network with other radio communication apparatuses existing therearound to wirelessly communicate with the aforementioned other radio communication apparatuses; wherein the ad-hoc communication means adopts a TDD-CDMA system common to the mobile communication network and uses the same frequency band as that of the mobile communication network when communicating with the said other radio communication apparatuses within the ad-hoc network, and synchronizes with the communication in the mobile communication network to communicate with the aforementioned other radio communication apparatuses within the ad-hoc network.

For example, as shown in claim 7 , the ad-hoc communication means can be configured to perform processing for detecting radio communication apparatuses therearound which are capable of constructing the ad-hoc network, acquiring from each of the radio communication apparatuses information thereabout, and storing the information in storage means, then obtain information about an intended radio communication apparatus from the information stored in the storage means, and communicate with the intended radio communication apparatus within the ad-hoc network based on the information.

As shown in claim 8, the ad-hoc communication means can be configured to synchronize with the communication in the mobile communication network based on information for synchronization received from the base station.

To achieve the above-described second object, the radio communication apparatus according to the second aspect of the present invention is, as shown in claim 9, a radio communication method used in constructing an ad-hoc network by multiple radio communication apparatuses, the radio communication method being characterized in: adopting a TDD-CDMA system common to communication in a mobile communication network and using the same frequency band as that of the mobile communication network, for communication within the ad-hoc network, and synchronizing with the communication in the mobile communication network to perform the communication within the ad-hoc network.

Here, the multiple radio communication apparatuses also include radio communication apparatuses which do not have the capability of connecting to a mobile communication network but have the ad-hoc communication function.

According to the second aspect of the present invention, similarly to the above-described first aspect of the present invention, a common TDD-CDMA system is adopted and the same frequency band is used for communication in the ad-hoc network and in the mobile communication network, so that it is possible to provide a radio communication apparatus capable of connecting to both of the ad-hoc network and the mobile communication network, in a simple configuration and at a low cost.

Furthermore, since communication in each of the ad-hoc network and themobile communication network is performed while synchronization between the networks is established, it is possible to avoid corruption of the orthogonality of spreading codes even when the same frequency band is used in the ad-hoc network and the mobile communication network. Accordingly, it is possible to reduce mutual interference between the ad-hoc network and the mobile communication network and secure favorable communication condition regardless of which network is used.

[Third aspect of the present invention]

In order to achieve the above-described third object, a radio communication apparatus according to a third aspect of the present invention is, as shown in claim 10, a radio communication apparatus to be a mobile station in a mobile communication network and communicate with a base station in the mobile communication network with the use of a TDD-CDMA system, the radio communication apparatus being characterized in comprising: ad-hoc communication means for constructing an ad-hoc network with other radio communication apparatuses existing therearound to wirelessly communicate with the aforementioned other radio communication apparatuses; wherein the ad-hoc communication means adopts a TDD-CDMA system common to the mobile communication network and uses the same frequency band as that of the mobile communication network in communication with the aforementioned other radio communication apparatuses, and uses, in the communication area of each base station of the mobile communication network, a spreading code orthogonal with a spreading code used for communication with the base station, for communication within the ad-hoc network.

Here, the ad-hoc communication means detects radio communication apparatuses having the ad-hoc communication function therearound; and, after performing processing for acquiring information about the radio communication apparatuses (for example, node information such as IDs and node types, spreading codes and time slots, and the like) from a particular radio communication apparatus (a master) and storing the information in its storage means, the ad-hoc communication means uses a communication channel assigned by the particular radio communication apparatus (the master) to communicate with another radio communication apparatus within the ad-hoc network.

As shown in claim 11, the spreading code is configured by combination of a channelization code constituted by an orthogonal variable spreading factor code and a scrambling code; and the ad-hoc communication means uses, in the communication area of each base station, a scrambling code orthogonal with the scrambling code used for communication with the base station, for communication within the ad-hoc network.

Specifically, as shown in claim 12, on the assumption that, in the communication area of each base station, the scrambling code used for communication with the base station is denoted by Sc; the scrambling code used within the ad-hoc network is denoted by Sa; a binary scrambling code to be a basis for the scrambling code Sc is denoted by v; and the code length of the scrambling codes Sc, Sa and v is denoted by Qs; the binary scrambling code v is a binary scrambling code the elements $v_k$ (k=1, ..., Qs) of which are {1, -1}; elements $Sc_k$ of the scrambling code Sc are derived from the following formula:

[Formula 1]

$$Sc_k = \exp\left(j\left(k\,\frac{\pi}{2} + 1\pi\right)\right)$$

(where, j is equal to $\sqrt{-1}$ ; and 1 is 0 when $v_k$=1, and 1 is 1 when $v_k$=-1) ; and elements $Sa_k$ of the scrambling code Sa are derived from the following formula:

[Formula 2]

$$Sa_k = \exp\left(j\left(\frac{2\pi k}{Qs} + 1\pi\right)\right)$$

As shown in claim 13, it is preferable that the ad-hoc communication means synchronizes with communication in the mobile communication network to communicate with the other radio communication apparatuses within the ad-hoc network.

According to the third aspect of the present invention, similarly to the above-described first aspect of the present invention, a common TDD-CDMA system is adopted and the same frequency band is used for communication in the ad-hoc network and in the mobile communication network, so that it is possible to avoid complexity of the apparatus configuration and increase in cost, and it is also possible to smoothly perform network handover.

Furthermore, in the communication area of each base station of the mobile communication network, a spreading code orthogonal with the spreading code used for communication with the base station is used for communication within the ad-hoc network, so that it is possible, even in the case of adopting a common TDD-CDMA system and using the same frequency band for communication in the ad-hoc network and in the mobile communication network, to prevent mutual interference between the networks as much as possible.

Furthermore, since communication in each of the ad-hoc network and the mobile communication network is performed while synchronization between the networks is established, it is possible to avoid corruption of the orthogonality of spreading codes. Accordingly, it is possible to further suppress mutual interference between the ad-hoc network and the mobile communication network and secure favorable communication condition regardless of which network is used.

[Fourth aspect of the present invention]

In order to achieve the above-described fourth object, a radio communication apparatus according to a fourth aspect of the present invention is, as shown in claim 14, a radio communication apparatus which uses a TDD-CDMA system for communication with a base station in a mobile communication network, the radio communication apparatus being characterized in comprising: ad-hoc communication means for constructing an ad-hoc network with other radio communication apparatuses existing therearound to wirelessly communicate with the aforementioned other radio communication apparatuses; wherein the ad-hoc communication means adopts a TDD-CDMA system common to the mobile communication network and uses the same frequency band as that of the mobile communication network when communicating with the aforementioned other radio communication apparatuses, and comprises interference signal removal means for removing interference signals other than a desired signal transmitted from the aforementioned other radio communication apparatuses.

Here, the ad-hoc communication means detects radio communication apparatuses having the ad-hoc communication function therearound; and, after performing processing for acquiring information about the aforementioned radio communication apparatuses (for example, node information such as IDs and node types, spreading codes and time slots, and the like) from a particular radio communication apparatus (a master) and storing the information in its storage means, the ad-hoc communication means obtains information about an intended radio communication apparatus (a radio communication apparatus to be a communication counterpart) from the information stored in the storage means and communicates with the intended radio communication apparatus within the ad-hoc network.

Well-known interference removal techniques can be applied as the interference signal removal means, and, for example, the following can be utilized: (1) joint detection in which the channel estimate of each user and the spreading code assigned to each user is convolution-multiplied to generate a system matrix, and a demodulated signal is derived by multiplying a receive signal by the inverse of the system matrix; and (2) an interference canceller in which a replica of an interference signal is generated from each user signal, and interference is suppressed by subtracting the replicas from receive signals. The joint detection and the interference canceller are disclosed, for example, in "CDMA Mobile Communication System" by Ramjee Prasad, pp. 319-369, Science Press, Inc., June 1997.

That is, for example, as shown in claim 15, the interference signal removal means can be configured to determine channel estimates of the desired signal and the interference signals from a known signal (for example, a midamble) included in receive signals, and remove the interference signals by means of joint detection with the use of the channel estimates and a spreading code assigned to each radio communication apparatus.

Alternatively, as shown in claim 16, the interference signal removal means can be configured to perform processing for generating replicas of the interference signals and subtracting the replicas from the receive signals to remove the interference signals.

As shown in claims 17 and 18, the interference signals include signals from the base station or a mobile station in the mobile communication network or signals which are not in synchronization with the desired signal among signals exchanged through communication within the ad-hoc network.

To achieve the above-described fourth object, a radio communication apparatus according to the fourth aspect of the present invention is, as shown in claim 19, a radio communication apparatus which uses a TDD-CDMA system for communication with a base station in a mobile communication network, the radio communication apparatus being characterized in comprising: ad-hoc communication means for constructing an ad-hoc network with other radio communication apparatuses existing therearound to wirelessly communicate with the other radio communication apparatuses; wherein the ad-hoc communication means adopts a TDD-CDMA system common to the mobile communication network and uses the same frequency band as that of the mobile communication network when communicating with the other radio communication apparatuses , and measures the power of interference signals for each of time slots specified for the uplink and the downlink transmission of the mobile communication network to select time slots to be used for communication within the ad-hoc network based on the measured values.

Here, as a method for selecting time slots to be used for communication within the ad-hoc network, the following methods are given: a method in which time slots specified for the uplink transmission of the mobile communication network and time slots specified for the downlink transmission are compared, and the time slots for any of the links are selected as the time slots for ad-hoc communication, and a method in which time slots satisfying conditions set in advance (for example, conditions about the power of interference signals) are selected based on the comparison as the time slots for ad-hoc communication; and any of the methods may be adopted.

For example, if time slots with lower interference power from the public network are selected as the time slots to be used for communication within the ad-hoc network based on the measured values in the former method, there is obtained an advantage that ad-hoc communication can be realized at lower transmission power.

On the other hand, if time slots with higher public interference power are selected, the public interference power from the radio communication apparatus decreases in the downlink transmission of the mobile communication network though the power consumption of the radio communication apparatus increases, and thereby, there is obtained an advantage that the characteristics of the entire network can be improved.

As shown in claim 20, it is preferable that the ad-hoc communication means performs transmit power control based on the measured values of the interference signals.

As shown in claim 21, the ad-hoc communication means may measure the power of interference signals for each of time slots specified for the uplink and the downlink transmission of the mobile communication network, and determine time slots to be used for communication within the ad-hoc network individually based on comparison of the measured values with a predetermined threshold. In this case, as shown in claim 22, it is preferable that the ad-hoc communication means uses the time slots specified for the downlink transmission of the mobile communication network for communication within the ad-hoc network if the power of interference signals in the time slots specified for the uplink transmission of the mobile communication network is equal to or below the threshold, and uses the time slots specified for the uplink transmission of the mobile communication network for communication within the ad-hoc network if the power of interference signals in the time slots specified for the downlink transmission is equal to or below the threshold. As shown in claim 23, it is preferable that, if the power of interference signals in the time slots specified for the uplink transmission of the mobile communication network is equal to or below the threshold and the power of interference signals in the time slots specified for the downlink transmission is equal to or below the threshold, the ad-hoc communication means uses both of the time slots specified for the downlink transmission and the time slots specified for the uplink transmission for communication within the ad-hoc network.

According to the fourth aspect of the present invention, interference signals included in receive signals, other than a desired signal, are cancelled when communication in the ad-hoc network is performed, so that it is possible to suppress deterioration of receiving characteristics due to the interference signals and avoid decrease in the communication capacity of the entire network even in the case of adopting a common TDD-CDMA system and using the same frequency band for communication in the ad-hoc network and in the mobile communication network.

Furthermore, the power of interference signals is measured for each of time slots specified for the uplink and the downlink transmission of the mobile communication network; time slots to be used for communication within the ad-hoc network are selected based on the measured values; and transmit power control is performed based on the measured values. Thereby, interference is difficult to occur between the ad-hoc network and the mobile communication network, and it is possible to secure favorable communication condition regardless of which network is used.

Furthermore, the power of interference signals is measured for each of time slots specified for the uplink and the downlink transmission of themobile communication network, and time slots to be used for communication in the ad-hoc network are individually determined based on comparison of the measured values with a threshold set in advance. Thereby, it is possible to use both of the time slots specified for the downlink transmission and the time slots specified for the uplink transmission, for communication within the ad-hoc network. Accordingly, for example, compared with the case of selecting either the uplink or the downlink of the mobile communication network and using it for communication within the ad-hoc network, the communication efficiency within the ad-hoc network can be enhanced.

[Fifth aspect of the present invention]

To achieve the above-described fifth object, a communication channel assignment method according to a fifth aspect of the present invention is, as shown in claim 24, a method for assigning a communication channel specified by TDD-CDMA time slots and spreading codes to a radio communication apparatus which adopts a common TDD-CDMA system and uses the same frequency band for communication in an ad-hoc network and in mobile communication network, as a communication channel to be used for communication within the ad-hoc network, the method being characterized in comprising the steps of: assuming that a radio communication apparatus managing the entire network is a master among multiple radio communication apparatuses constituting the ad-hoc network, and a radio communication apparatus performing communication under the control of the master is a slave, the master selecting communication channels to be dynamically assigned to communication within the ad-hoc network, from among all communication channels registered in advance, and setting assignment priority for the selected communication channels based on a predetermined evaluation criterion related to communication conditions; and the master assigning a communication channel based on the assignment priority when assignment of a communication channel is requested by the slave and notifying the communication channel to the slave.

After performing processing for detecting radio communication apparatuses (nodes) having the ad-hoc communication function therearound, acquiring information about the radio communication apparatuses (for example, node information such as IDs and node types, information about communication channels such as spreading codes and time slots, and the like) from a master and storing the information in its storage means, the radio communication apparatus obtains information about an intended radio communication apparatus from among the information stored in the storage means and performs communication with the intended radio communication apparatus within the ad-hoc network based on the information.

As the predetermined evaluation criterion related to communication conditions, there are included evaluation criteria related to a network configuration, load condition, and interference condition. As the evaluation criterion related to interference condition, an interference level in each time slot is included. As the evaluation criterion related to a network configuration, there is included an evaluation criterion, on which a communication channel to be assigned, such as a communication channel used for two-way communication and a communication channel to be assigned when one node within the ad-hoc network communicates with multiple nodes, for example, is differentiated based on whether it satisfies a particular condition.

That is, as shown in claim 25 , in the communication channel assignment method according to the present invention, the master may measure an interference level in each TDD-CDMA time slot as the predetermined evaluation criterion related to communication conditions, and set the assignment priority so that a communication channel with a lower interference level is given a higher priority. In this case, it is desirable that, when assigning multiple communication channels to communication within the ad-hoc network, the master preferentially assigns communication channels with the same time slots and with different spreading codes, as shown in claim 26.

Alternatively, in the communication channel assignment method according to the present invention, when assignment of a communication channel is requested by the slave, the master may preferentially assign a pair of communication channels with the same spreading code and for different time slots as communication channels to be used for two-way communication, as shown in claim 27.

Furthermore, in the communication channel assignment method according to the present invention, it is preferable that the master preferentially assigns, when any of the radio communication apparatuses constituting the ad-hoc network communicates with multiple radio communication apparatuses within the ad-hoc network, communication channels with the same time slots and with different spreading codes as communication channels to be used for the communication, as shown in claim 28.

It is preferable that the aforementioned spreading codes are configured by combination of a scrambling code specific to the ad-hoc network and channelization codes constituted by orthogonal variable spreading factor codes; the channelization codes include channelization codes for control signals and channelization codes for data signals; and the channelization codes for data signals are dynamically assigned to communication within the ad-hoc network, as shown in claim 29.

Here, the control signal is a signal for control to be exchanged between a master and a slave when an ad-hoc network is constructed, maintained and managed, and the data signal is a signal for data to be exchanged between nodes in the ad-hoc network.

To achieve the above-described fifth object, a communication channel assignment apparatus according to the fifth aspect of the present invention is, as shown in claim 30, a communication channel assignment apparatus for assigning a communication channel specified by TDD-CDMA time slots and spreading codes to a radio communication apparatus which adopts a common TDD-CDMA system and uses the same frequency band for communication in an ad-hoc network and in mobile communication network, as a communication channel to be used for communication within the ad-hoc network, the communication channel assignment apparatus being characterized in comprising: priority setting means for selecting communication channels to be dynamically assigned to communication within the ad-hoc network, from among all communication channels registered in advance, and setting assignment priority for the selected communication channels based on a predetermined evaluation criterion related to communication conditions; and communication channel assignment means for assigning a communication channel based on the assignment priority when assignment of a communication channel is requested by a node constituting the ad-hoc network and notifying the communication channel to the node; wherein the priority setting means measures an interference level in each TDD-CDMA time slot as the predetermined evaluation criterion related to communication conditions, and sets the priority so that a communication channel with a lower interference level is given a higher priority.

Furthermore, to achieve the above-described fifth obj ect, a radio communication apparatus according to the fifth aspect of the present invention is, as shown in claim 31, a radio communication apparatus which adopts a common TDD-CDMA system and uses the same frequency band for communication in an ad-hoc network and in a mobile communication network, the radio communication apparatus being characterized in comprising: a communication channel assignment apparatus for assigning a communication channel specified by TDD-CDMA time slots and spreading codes as a communication channel to be used for communication within the ad-hoc network; wherein the communication channel assignment apparatus comprises: priority setting means for selecting communication channels to be dynamically assigned to communication within the ad-hoc network, from among all communication channels registered in advance, and setting assignment priority for the selected communication channels based on a predetermined evaluation criterion related to communication conditions; and communication channel assignment means for assigning a communication channel based on the assignment priority when assignment of a communication channel is requested by a node constituting the ad-hoc network and notifying the communication channel to the node; wherein the priority setting means measures an interference level in each TDD-CDMA time slot as the predetermined evaluation criterion related to communication conditions, and sets the priority so that a communication channel with a lower interference level is given a higher priority.

According to the fifth aspect of the present invention, communication channels which can be dynamically assigned to communication within the ad-hoc network are selected from among all communication channels registered in advance; assignment priority is set for the selected communication channels based on a predetermined evaluation criterion related to communication conditions; and a communication channel is assigned based on the assignment priority when assignment of a communication channel is requested. Thereby, even under a network environment in which an ad-hoc network and a mobile communication network co-exist, it is possible to assign a communication channel based on communication conditions, and therefore, it is possible to enhance efficiency and optimization of communication in the ad-hoc network. Furthermore, as the predetermined evaluation criterion related to communication conditions, the interference level in each TDD-CDMA time slot is measured, and the assignment priority is set so that a communication channel with a lower interference level is given higher priority. Accordingly, even in the case of adopting a common TDD-CDMA system and using the same frequency band for communication in the ad-hoc network and in the mobile communication network, it is possible to suppress mutual interference between the networks, and thereby, it is possible to secure favorable communication conditions and avoid decrease in throughput or communication capacity.

Brief Description of the Drawings

FIG. 1 is a schematic block diagram showing an embodiment of an ad-hoc network to which a radio communication method according to the present invention is applied;
FIG. 2 shows that the ad-hoc network and a mobile communication network are synchronized with each other;
FIG. 3 is a block diagram showing configuration of main components of a first radio communication apparatus in FIG. 1;
FIG. 4 is a flowchart illustrating processing for connecting to the ad-hoc network in FIG. 1;
FIG. 5 shows a configuration of TDD-CDMA time slots;
FIG. 6 is a block diagram showing configuration of main components of a first radio communication apparatus in a second embodiment;
FIG. 7 is a schematic diagram illustrating a method for selecting time slots to be used for communication within the ad-hoc network;
FIGS. 8A and 8B are schematic diagrams illustrating interference signals which occur in the downlink of the mobile communication network;
FIGS. 9A and 9B are schematic diagrams illustrating interference signals which occur in the uplink of the mobile communication network;
FIG. 10 shows another example of a receiver in FIG. 6;
FIG. 11 is a schematic diagram illustrating a third embodiment of the method for selecting time slots to be used for communication within the ad-hoc network;
FIG. 12 is a schematic diagram showing that the ad-hoc network is constructed near a base station;
FIG. 13 is a schematic diagram showing that the ad-hoc network is constructed far away from the base station;
FIGS. 14A and 14B are schematic diagrams illustrating a method for minimizing assignment of time slots;
FIG. 15 is a schematic block diagram showing an example of the mobile communication network;
FIG. 16 is a schematic diagram illustrating a TDD mode and an FDD mode;
FIG. 17 shows an example of frame configuration of TDD-CDMA; and
FIG. 18 is a schematic block diagram showing an example of the ad-hoc network.

Best Mode for Carrying Out the Invention

[First embodiment]

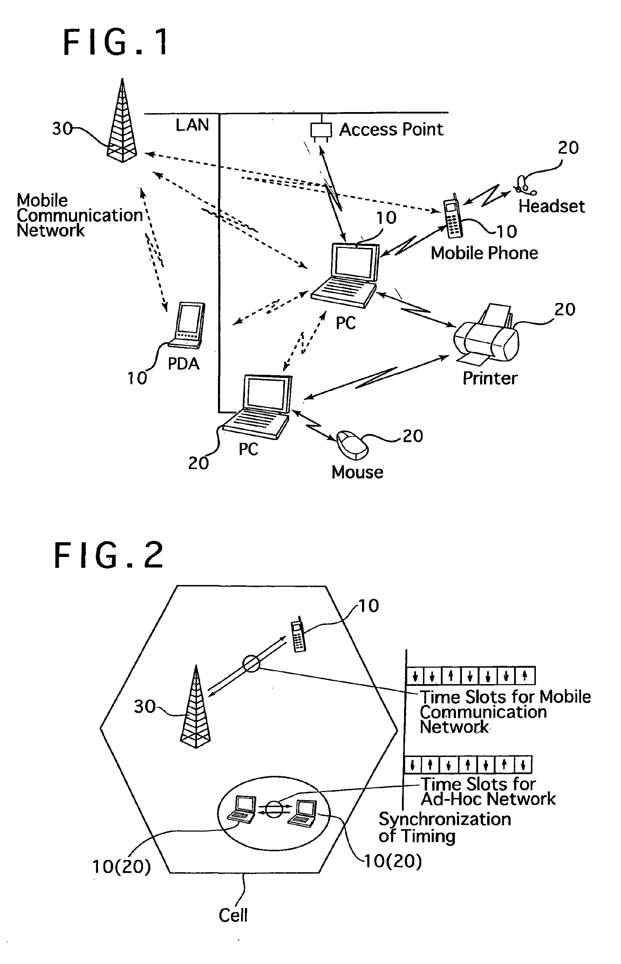

FIG. 1 shows an embodiment of an ad-hoc network to which a radio communication method according to the present invention is applied. In the figure, reference numeral 10 denotes first radio communication apparatuses, and reference numeral 20 denotes second radio communication apparatuses.

A first radio communication apparatus 10 is a radio communication apparatus (a radio communication apparatus according to the present invention) having a function of connecting to a mobile communication network, and configured, for example, by a mobile phone, a PDA, a personal computer, or the like. The first radio communication apparatus 10 uses a TDD-CDMA system to communicate with a base station 30 of the mobile communication network.

Meanwhile, a second radio communication apparatus 20 is a radio communication apparatus without a function of connecting to a mobile communication network, and configured, for example, by an information device (for example, a personal computer, a work station or the like) wiredly or wirelessly connected to a fixed communication network such as a LAN (Local Area Network), or peripheral equipment of the information device (for example, a headset, a printer, a mouse or the like).

These first and second radio communication apparatuses 10 and 20 have an ad-hoc communication function for constructing an ad-hoc network with other radio communication apparatuses 10 and 20 existing around them so that the radio communication apparatuses within the ad-hoc network mutually communicate with one another. The same TDD-CDMA system is adopted and the same frequency band is used for communication in the ad-hoc network and in the mobile communication network. Furthermore, communication within the ad-hoc network is performed in synchronization with the communication in the mobile communication network, as shown in FIG. 2.

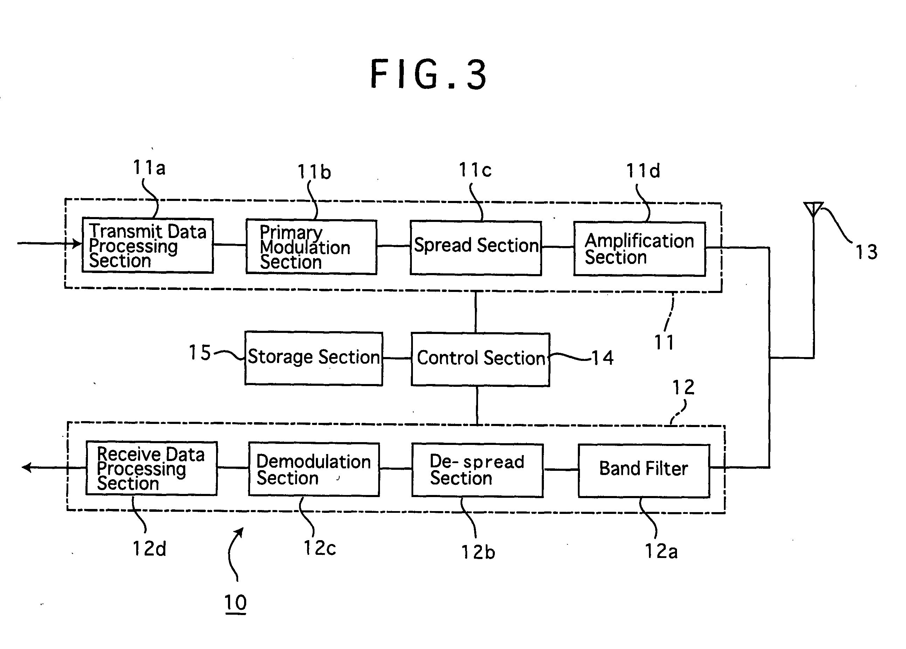

FIG. 3 is a block diagram showing configuration of main components of the first radio communication apparatus. As shown in FIG. 3, the first radio communication apparatus 10 has a transmitter 11, a receiver 12, an antenna 13, a control section 14 and a storage section 15.

The transmitter 11 is provided with a transmit data processing section 11a for generating a transmit signal, a primary modulation section 11b for performing primary modulation of a carrier wave with the transmit signal, a spread section 11c for performing spread modulation (secondary modulation) of the modulated signal obtained by the primary modulation with a spreading code (an orthogonal spreading code), and an amplification section 11d for amplifying the spread-modulated signal. That is, the transmit signal generated by the transmit data processing section 11a is primary-modulated in a predetermined modulation mode at the primary modulation section 11b, then spread-modulated with a spreading code at the spread section 11c, then amplified at the amplification section 11d, and then emitted from the antenna 13 as a radio wave. As the spreading code, a code with high orthogonality is used so that cross-correlation between codes is sufficiently reduced when there is no phase difference between the codes. Specifically, the spreading code is configured by combination of a channelization code and a scrambling code, and a spreading code orthogonal with a spreading code used for communication with the base station 30 is assigned to communication within the ad-hoc network.

The receiver 12 is provided with a band filter 12a for removing an unnecessary noise component included in a receive signal received from the antenna 13, a de-spread section 12b for de-spreading the receive signal, which has passed the band filter 12a, with a spreading code, a demodulation section 12c for demodulating a signal obtained by the de-spreading, and a receive data processing section 12d for performing various processings related to connection to the ad-hoc network or the mobile communication network based on the demodulated signal. That is, the receive signal received by the antenna 13 is de-spread by the same spreading code as used by the transmitting side after a noise component is removed by the band filter 12a, and then, it is demodulated at the demodulation section 12c to be returned to a baseband wave.

The control section 14 controls the transmitter 11 and the receiver 12 based on various information stored in the storage section 15. Synchronization control (synchronization acquisition and tracking) between the ad-hoc network and the mobile communication network, switching control between transmitting and receiving, transmit power control, switching control between the ad-hoc network and the mobile communication network, and the like are performed by this control section 14. For example, in the case of communicating with the base station 30 in the mobile communication network or another radio communication apparatus within the ad-hoc network via a wireless line, switching between transmitting and receiving is performed based on preset assignment of time slots, and the communication is performed in a TDD mode. In the case of communicating with another radio communication apparatus within the ad-hoc network, the timing of communication with that other radio communication apparatus is set so that it corresponds to the communication timing in the mobile communication network, based on information for synchronization received from the base station 30. Furthermore, in the case of communication with that other radio communication apparatus within the ad-hoc network, the interference level is detected from a receive signal inputted into the receiver 12, and transmit power is adjusted based on the interference level.

In this embodiment, ad-hoc communication means according to the present invention is configured by the transmitter 11, the receiver 12, the antenna 13, the control section 14, the storage section 15 and the like.

The second radio communication apparatus 20 also has a transmitter, a receiver, an antenna, a control section and a storage section similar to those of the above-described first radio communication apparatus 10 and is capable of communicating with another radio communication apparatus within the ad-hoc network by means of these communication means without intervening of the base station 30.

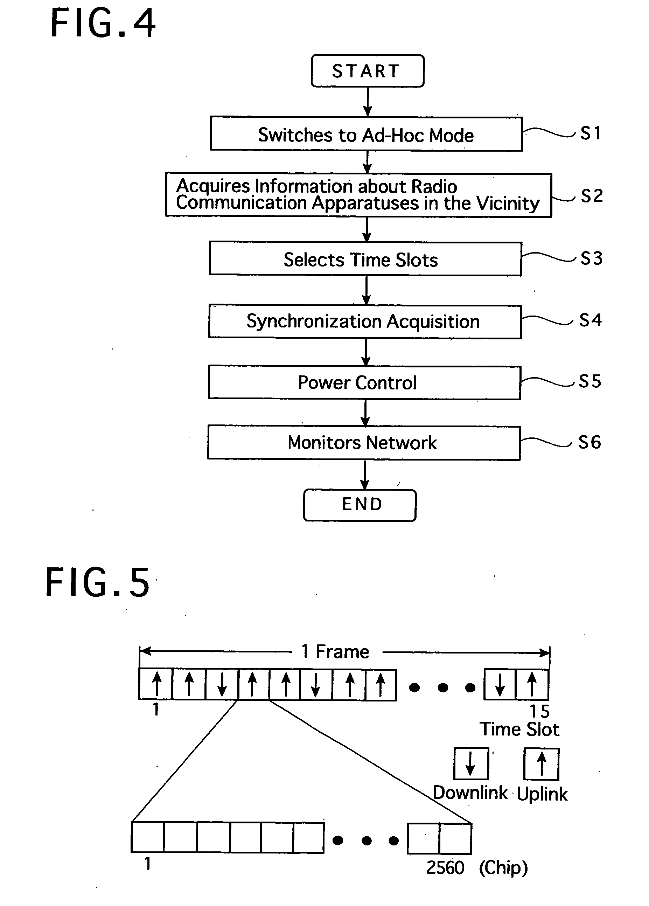

Next, description will be made on processing for connecting to the ad-hoc network to be performed by the first radio communication apparatus 10 configured as described above, based on a flowchart in FIG. 4.

First, at step S1, processing for switching the communication mode to an ad-hoc mode is performed. This processing may be automatically performed when a preset condition is satisfied or may be performed based on an input operation by a user.

Then, at step S2, processing for acquiring information about radio communication apparatuses 10 and 20 existing in the vicinity is performed. Specifically, it is examined whether or not radio communication apparatuses 10 and 20 in the ad-hoc mode exist in the vicinity based on receive signals inputted into the receiver 12. As a result, if other radio communication apparatuses 10 and 20 in the ad-hoc mode exist around, then it is determined whether or not each of the radio communication apparatuses 10 and 20 has authorization to access an ad-hoc network and whether or not each of them is in a state capable of connecting to an ad-hoc network. Based on the determination result, "radio communication apparatuses capable of constructing an ad-hoc network" are identified and detected from among radio communication apparatuses 10 and 20 which are in the ad-hoc mode. Then, after storing information about the radio communication apparatuses (such as a spreading code to be used for transmitting, the ID specific to each apparatus) in storage means such as the storage section 15, the process proceeds to the next step S3.

At step S3, processing is performed for selecting time slots to be used for communication within the ad-hoc network from TDD-CDMA time slots. As the selection method, the following methods are included: (1) a method in which only time slots specified for the downlink transmission of the mobile communication network are selected; (2) a method in which only time slots specified for the uplink transmission are selected; and (3) a method in which selection is made from both of the time slots specified for the uplink transmission and the time slots specified for the downlink transmission, and any method may be adopted. In this embodiment, only time slots specified for the downlink transmission are selected in order to reduce mutual interference between the ad-hoc network and the mobile communication network.

At step S4, a signal from the base station 30 is received, and information for synchronization included in a predetermined time slot of the receive signal is selected. Based on the information for synchronization, processing is performed for setting a communication timing within the ad-hoc network so that the communication timing corresponds to the communication timing in the mobile communication network.

At step S5, information about an intended radio communication apparatus (a first radio communication apparatus 10 or a second radio communication apparatus 20) is obtained from the information stored in the storage means, and communication is performed with the intended radio communication apparatus via the ad-hoc network based on the obtained information. In this case, power control is performed in order not to interfere with radio communication apparatuses in the vicinity which are not participating within the ad-hoc network. That is, the interference level of all the time slots are measured based on the receive signals inputted into the receiver 12, and transmit power control is performed so that the transmit power does not exceed the maximum value (a tolerance value), which is the sum of the measured values and an offset value (a positive number or a negative number) set in advance.

After connection to the ad-hoc network is completed, similarly to step S2 described above, processing for monitoring the state of the ad-hoc network is repeated in a predetermined cycle until the number of radio communication apparatuses 10 and 20 participating the ad-hoc network reaches an upper limit (for example, fifteen), and the information about the radio communication apparatuses 10 and 20 is updated as appropriate (step S6). When the number of the radio communication apparatuses participating the ad-hoc network becomes "1", the ad-hoc network automatically disappears.

Next, description will be made on a spreading code used in the ad-hoc network and the mobile communication network.

As the spreading code, two types of codes are used: channelization codes and scrambling codes.

The channelization codes are OVSF (Orthogonal Variable Spreading Factor) codes. In a mobile communication network, the channelization codes are used at a receiving side (a base station or a mobile station) to identify a transmitting side (a mobile station or a base station), and in an ad-hoc network, the channelization codes are used for identifying a transmitting node or a receiving node within the network. The channelization codes can be shared by a mobile communication network and an ad-hoc network. In communication within an ad-hoc network, the channelization codes are classified into channelization codes for control signals exchanged between a master and a slave and channelization codes for data signals exchanged between nodes, and the channelization codes for data signals are dynamically assigned to communication within the ad-hoc network.

The scrambling codes are used for identifying a mobile communication network and an ad-hoc network. In a mobile communication network, the scrambling codes are used for identifying cells to which a base station and a mobile station belong. That is, scrambling codes are specified for each cell so that they are not duplicated among near cells. Furthermore, in this embodiment, a scrambling code orthogonal with a scrambling code specified for a cell is assigned to an ad-hoc network formed in the cell.

In TDD-CDMA, spread processing is performed first by a channelization code, and then, spread processing is performed by a scrambling code. The channelization code is a code with a length of $Q_c$, the elements of which are real numbers, and the scrambling code is a code with a length of $Q_s$, the elements of which are complex numbers. In this embodiment, there are provided a scrambling code Sc to be used for a mobile communication network and a scrambling code Sa to be used for an ad-hoc network, and these complex scrambling codes are generated from a common binary scrambling code $v=(v_1, v_2, ..., v_{Qs})$. The binary scrambling code v is a binary code with $\{1, -1\}$ as elements $V_k$ (k=1, ...,Qs).

If it is assumed that the scrambling code for a mobile communication network $Sc=(Sc_1, Sc_2, ..., Sc_{Qs})$, then its elements $Sc_k$ (k=1, ... , Qs) can be determined from the following formula with the use of the elements $v_k$ of the binary

scrambling code v.

[Formula 1]

$$Sc_k = \exp\left(j\left(k\frac{\pi}{2} + l\pi\right)\right)$$

Here, j is equal to $\sqrt{-1}$ ; and 1 is 0 when $v_k$=1, and l is 1 when $v_k$=-1. According to the above formula, each element $Sc_k$ of the scrambling code Sc takes any value among {1, j, -1, -j}.

Similarly, if it is assumed that the scrambling code for an ad-hoc network Sa= ($Sa_1$, $Sa_2$, ..., $Sa_{Qs}$), then its elements $Sa_k$ (k=1, ... , Qs) can be determined from the following formula with the use of the elements $v_k$ of the binary scrambling code v.

[Formula 2]

$$Sa_k = \exp\left(j\left(\frac{2\pi k}{Qs} + l\pi\right)\right)$$

The obtained scrambling codes Sc and Sa are orthogonal with each other. The inner product of the scrambling codes Sa and Sc is as follows.

[Formula 3]

$$= \sum_{K=1}^{Qs} \exp\left(j\,k\,\frac{\pi}{2}\right)\exp\left(-j\,\frac{2\pi k}{Qs}\right)$$

$$= \sum_{K=1}^{Qs} \exp\left(j\left[\frac{\pi}{2} - \frac{2\pi}{Qs}\right]k\right)$$

$$= \frac{1 - \exp\left(j\left[\frac{\pi}{2} - \frac{2\pi}{Qs}\right]Qs\right)}{1 - \exp\left(j\left[\frac{\pi}{2} - \frac{2\pi}{Qs}\right]\right)}$$

$$= \exp\left(j\pi\left[\frac{Qs}{4} - 1 - \frac{\pi}{4} + \frac{1}{Qs}\right]\right)\frac{\sin\left(\frac{Qs\pi}{4} - \pi\right)}{\sin\left(\frac{\pi}{4} - \frac{\pi}{Qs}\right)}$$

Here, if Qs=16, then sin (Qsπ/4-π) =sin (3π) =0. Therefore, the inner product of the scrambling codes Sa and Sc is 0. Accordingly, in each cell, the spreading code used for communication in the mobile communication network (channelization code × scrambling code Sc) and the spreading code used for communication in the ad-hoc network

(channelization code $\times$ scrambling code Sa) are orthogonal with each other, and thereby, mutual interference between both networks can be suppressed.

For example, if it is assumed that v=(1, 1, 1, 1, 1, -1, -1, 1, -1, -1, 1, 1, 1, -1, 1, -1), then Sc=($e^{j \cdot \pi/2}$, $e^{j \cdot \pi}$, $e^{j \cdot 3 \pi/2}$, $e^{j \cdot 2 \pi}$, $e^{j \cdot \pi/2}$, $e^{j \cdot 2 \pi}$, $e^{j \cdot \pi/2}$, $e^{j \cdot 2 \pi}$, $e^{j \cdot 3 \pi/2}$, $e^{j \cdot 2 \pi}$, $e^{j \cdot 3 \pi/2}$, $e^{j \cdot 2 \pi}$, $e^{j \cdot \pi/2}$, $e^{j \cdot 2 \pi}$, $e^{j \cdot 3 \pi/2}$, $e^{j \cdot \pi}$)=(j, -1, -j, 1, j, 1, j, 1, -j, 1, -j, 1, j, 1, -j, -1), and Sa=($e^{j \cdot \pi/8}$, $e^{j \cdot \pi/4}$, $e^{j \cdot 3 \pi/8}$, $e^{j \cdot \pi/2}$, $e^{j \cdot 5 \pi/8}$, $e^{j \cdot 7 \pi/4}$, $e^{j \cdot 15 \pi/8}$, $e^{j \cdot \pi}$, $e^{j \cdot \pi/8}$, $e^{j \cdot \pi/4}$, $e^{j \cdot 11 \pi/8}$, $e^{j \cdot 3 \pi/2}$, $e^{j \cdot 13 \pi/8}$, $e^{j \cdot 3 \pi/4}$, $e^{j \cdot 15 \pi/8}$, $e^{j \cdot 2 \pi}$). When the inner product of these scrambling codes Sc and Sa is determined, it is 0. One hundred and twenty-eight scrambling codes shown in Annex A of Release 5.0 of 3GPP Specification 25.223 can be used as the binary scrambling code v, and the v shown above as a specific example is the ninety-fifth code among them.

Next, a method for synchronizing an ad-hoc network and a mobile communication network will be specifically described.

First, all base stations 30 constituting the mobile communication network mutually communicate with one another via a wired network or with the use of GPS (Global Positioning System) or DGPS (Differential GPS) to make synchronization of the entire mobile communication network.

Then, each base station 30 inserts information for synchronization into a preset time slot among TDD-CDMA time slots and transmits a signal including the information so that the signal reaches the entire cell. As for the TDD-CDMA time slots, one frame is configured by fifteen time slots, and one time slot is configured by 2,560 chips, as shown in FIG. 5. Each time slot is assigned to any of the uplink and the downlink.

Then, radio communication apparatuses 10 and 20 in the cell receive the signal from the base station 30 and obtain the information for synchronization included in the predetermined time slot of the received signal, and then, based on the information for synchronization, processing is performed for setting a communication timing within the ad-hoc network (the processing at step S4 described above) so that the communication timing corresponds to the timing in the mobile communication network. Specifically, as a method for making synchronization based on the information for synchronization, there are a method using a sliding correlator or a method using a matched filter. Any method can be adopted, however. For example, in the method using a sliding correlator, a code sequence (for example, Gold code) known between the base station 30 and a radio communication apparatus is used as the information for synchronization. In this method, by changing the phase of the code sequence little by little on the radio communication apparatus (receiving side), and sequentially comparing it with the code sequence received from the base station 30 (transmitting side) to detect an autocorrelation peak appearing in the output, chip-level synchronization acquisition is performed. By detecting multiple pieces of information that the peak has, slot-level and frame-level synchronization acquisition is performed. Through the above processing, synchronization between the ad-hoc network and the mobile communication network is established.

As described above, according to this embodiment, a common TDD-CDMA system is adopted and the same frequency band is used for communication in an ad-hoc network and in a mobile communication network, and thereby, it is possible to provide a radio communication apparatus 10 capable of connecting to both of the ad-hoc network and the mobile communication network, in a simple configuration and at a low cost.

Furthermore, in the communication area of each base station 30, a spreading code orthogonal with a spreading code used for communication with the base station 30 is used for communication within the ad-hoc network, and thereby, even in the case of adopting a common TDD-CDMA system and using the same frequency band for communication within the ad-hoc network and in the mobile communication network, it is possible to suppress mutual interference between the networks as much as possible.

Furthermore, communication in each of the ad-hoc network and the mobile communication network is performed while synchronization between the networks is established, so that it is possible to avoid corruption of the orthogonality of spreading codes and increase in mutual correlation between spreading codes due to phase difference even if the same frequency band is used in the ad-hoc network and in the mobile communication network. Accordingly, it is possible to reduce mutual interference between the ad-hoc network and the mobile communication network and to secure favorable communication condition regardless of which network is used.

Furthermore, by the radio communication apparatuses 10 and 20 within the ad-hoc network mutually communicating with one another, it is possible to reduce a load imposed on the mobile communication network, and thereby, it is possible to enhance the communication efficiency of the entire network and increase the communication capacity of the network.

Furthermore, in the case where radio waves do not reach the base station 30, other radio communication apparatuses 10 and 20 within the ad-hoc network, the radio waves of which reach the base station 30, can be used as a relay apparatus, and as a result, the area in which connection to the mobile communication network is possible can be enlarged. Furthermore, a common TDD-CDMA system is used for communication in the ad-hoc network and in the mobile communication network, and thereby it is possible to smoothly perform handover between the networks.

In this embodiment, when communication is performed, selection about which of the mobile communication network and the ad-hoc network should be used is made by the control section 14, for example, in consideration of each of the factors as shown below. That is, (1) whether the intended radio communication apparatus is located within the ad-hoc network, (2) whether the intended radio communication apparatus is in a state capable of favorably communicating with a mobile communication network or a wired network, (3) whether the call has been received outside the ad-hoc network, (4) the amount of traffic and the communication quality balance between the mobile communication network and the ad-hoc network, (5) security, (6) whether the target to be multicast is included in the ad-hoc network, (7) whether the communication counterpart is peripheral equipment such as a headset and a mouse, and the like.

[Second embodiment]

Next, a second embodiment of the present invention will be described. Components similar to those shown in the first embodiment are given the same reference numerals, and description thereof will be simplified.

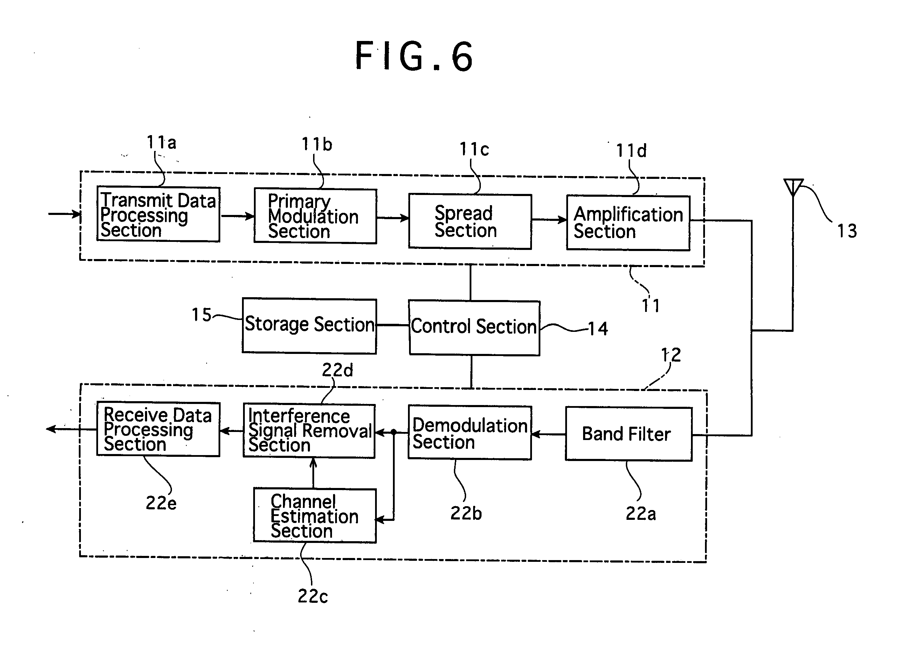

FIG. 6 is a block diagram showing configuration of main components of a first radio communication apparatus. As shown in FIG. 6, the first radio communication apparatus 10 has a transmitter 11, a receiver 12, an antenna 13, a control section 14 and a storage section 15.

Similarly to the first embodiment, the transmitter 11 is provided with a transmit data processing section 11a for generating a transmit signal, a primary modulation section 11b for performing primary modulation of a carrier wave with the transmit signal, a spread section 11c for performing spread modulation (secondary modulation) of the modulated signal obtained by the primary modulation with a spreading code (an orthogonal spreading code), and an amplification section 11d for amplifying the spread-modulated signal. That is, a transmit signal generated by the transmit data processing section 11a is primary-modulated in a predetermined modulation mode at the primary modulation section 11b, then spread-modulated with a spreading code at the spread section 11c, then amplified at the amplification section 11d, and then emitted from the antenna 13 as a radio wave. Similarly to the first embodiment, a spreading code configured by combination of a channelization code and a scrambling code is used as the spreading code, and a spreading code orthogonal with a spreading code used for communication with a base station 30 is assigned to communication within an ad-hoc network.

The receiver 12 is provided with a band filter 22a for removing an unnecessary noise component included in a receive signal received from the antenna 13, a demodulation section 22b for demodulating the receive signal which has passed the band filter 22a to a baseband signal, a channel estimation section 22c for determining a channel estimate from a midamble included in the baseband signal, an interference signal removal section (interference signal removal means) 22d for removing interference signals by means of joint detection with the use of the channel estimate and the spreading code of each radio communication apparatus, and a receive data processing section 22e for performing various processings based on the demodulated signal from which interference signals have been removed. To each of the radio communication apparatuses 10 and 20, there is assigned a specific midamble so that a channel estimate of each radio communication apparatus can be derived from a midamble included in a receive signal. The interference signal removal section 22d is adapted to generate a system matrix by performing convolution multiplication of the spreading code assigned to each radio communication apparatus in advance and the above-described channel estimate, and obtain a demodulated signal by multiplying a baseband signal by this system matrix.

The control section 14 controls the transmitter 11 and the receiver 12 based on various information stored in the storage section 15. Switching control between transmitting and receiving, transmit power control, switching control and synchronization control between the ad-hoc network and the mobile communication network, and the like are performed by the control section 14. For example, in the case of communicating with the base station 30 in the mobile communication network or another radio communication apparatus within the ad-hoc network via a wireless line, switching between transmitting and receiving is performed based on assignment of time slots which has been specified in advance, and the communication is performed in a TDD mode.

In starting communication with another radio communication apparatus within the ad-hoc network, the power of interference signals is measured for each of time slots specified for the uplink and the downlink transmission of the mobile communication network, and processing for selecting time slots to be used for communication within the ad-hoc network is performed based on the measured values. In the case of communicating with another radio communication apparatus within the ad-hoc network, the timing of communication with that other radio communication apparatus is set so that it corresponds to the communication timing in the mobile communication network, based on information for synchronization received from the base station 30. Furthermore, in the case of communicating with that other radio communication apparatus within the ad-hoc network, the interference level is detected from a receive signal inputted into the receiver 12 so that transmit power is adjusted based on the interference level.

Next, description will be made on processing for connecting to an ad-hoc network to be performed by the first radio communication apparatus 10 configured as described above. Here, the first radio communication apparatus 10 will be described as a node X. A radio communication apparatus which manages the entire ad-hoc network is referred to as a master, and a radio communication apparatus which performs radio communication under the control of the master is referred to as a slave.

This processing is started, for example, when the SIR (Signal to Interference Ratio) of an ad-hoc network is stronger than that of a mobile communication network or when the communication mode is switched to an ad-hoc mode.

First, the node X performs processing for searching whether or not there is a master in an ad-hoc network and setting the node type of the node X to any of master or slave based on the search result. That is, the node X performs processing for detecting a pilot signal originated from a master. As a result, if the pilot signal can be detected, the node X sets its node type to slave, and sets its node type to master if the pilot signal cannot be detected.

In this case, if the node type of the node X is set to slave, the node X performs processing for transmitting node information (for example, the ID, the address and the like of the node X) to the master with the use of a common channel set in advance. When receiving the node information about the node X, the master updates network information (node information about each slave, network resources, parameters of QoS (Quality of Service) and the like) in its storage section based on the node information about the node X, and then performs processing for delivering the network information to each of slaves (including the node X) within the ad-hoc network. Thereby, the node X is incorporated in the ad-hoc network as a slave.

On the other hand, if the node type of the node X is set to master, the node X repeatedly originates (broadcasts) a pilot signal in a predetermined cycle, and periodically performs processing for updating the network information and processing for detecting the communication condition of slaves while monitoring control signals outputted from the slaves. Thereby, an ad-hoc network is constructed in which the node X is a master, and maintenance and management of the ad-hoc network is carried out by the node X.

Next, description will be made on processing to be performed when communication is performed between nodes within the ad-hoc network constructed as described above. For example, when the node X starts communication with another radio communication apparatus (hereinafter referred to as a node Y) set as a slave, in the case where the node X is set to slave, the node X first performs processing for specifying the ID of the node Y, which is to be a communication counterpart, and transmitting a communication request message to a master. On receiving this message, the master refers to network information in its storage section to check the communication condition of the node Y and check network resources (for example, frequency bands, spreading codes, time slots and the like) available for communication, and performs processing for assigning a communication channel between the nodes X and Y based on the network resources.

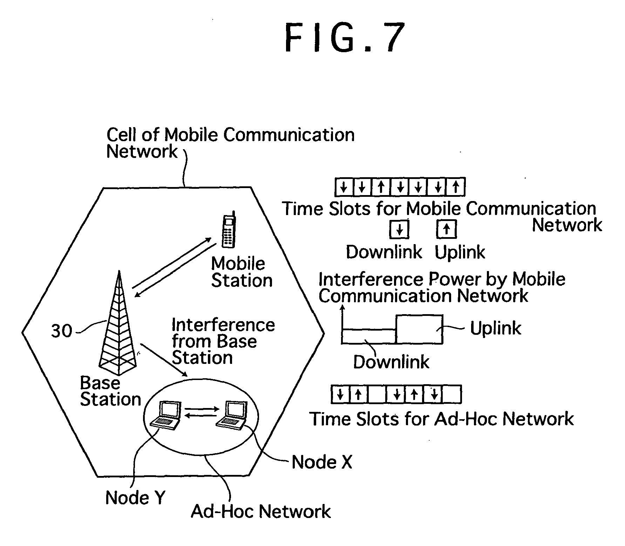

In this case, the master performs processing for assigning the most efficient communication channel as the communication channel between the nodes X and Y by measuring the power of interference signals (signals from a mobile station and the base station 30 in the mobile communication network) for each of time slots specified for the uplink and the downlink transmission of the mobile communication network, and preferentially selecting time slots with less public interference power as time slots to be used for communication within the ad-hoc network, based on the measured values. In the example in FIG. 7, since the public interference power of time slots specified for the downlink transmission is less than that of time slots specified for the uplink transmission, the time slots specified for the downlink transmission of the mobile communication network are to be used as time slots for communication within the ad-hoc network.

It is also possible to adopt, as the method for selecting the time slots, a method in which the power of interference signals, for example, only for time slots specified for the downlink transmission are measured, and time slots specified for the uplink transmission are selected as time slots to be used for communication within the ad-hoc network if the measured value is above a threshold set in advance, while the time slots specified for the downlink transmission are selected if the measured value is below the threshold. Though time slots with less public interference power are preferentially selected as time slots to be used for communication within the ad-hoc network in this embodiment, it is preferable to preferentially select time slots with more public interference power, on the contrary to the above, if it is required more to improve communication characteristics of the entire network than to improve communication characteristics of each node within the ad-hoc network, for example. This makes it possible to reduce public interference power of each node in the downlink of the mobile communication network, and thereby makes it possible to improve the communication characteristics of the entire network.

After assigning a communication channel as described above, the master performs processing for returning setting information in which the assignment of the communication channel is specified to the node X which has transmitted the communication request. In this case, the master also performs processing for updating the network information based on the setting information and storing it in its storage section and processing for delivering the update network information to each slave within the ad-hoc network.

Receiving the setting information required for communication with the node Y from the master, the node X stores the setting information in the storage section 15 and then starts transmitting/receiving of data signals directly with the node Y. In this case, the node X performs power control in order not to interfere with radio communication apparatuses in its vicinity which are not participating in the ad-hoc network. That is, the interference levels of all time slots are measured based on the receive signal inputted into the receiver 12; the sum of the measured values and an offset value determined in advance is set as the maximum value (a tolerance value) of transmit power; and transmit power control is performed so that the maximum value is not exceeded. The node X receives a signal from the base station 30 and obtains information for synchronization included in a predetermined time slot of the received signal. The node X then performs processing for setting a timing of communication with the node Y so that the timing corresponds to the communication timing in the mobile communication network, based on the obtained information for synchronization.

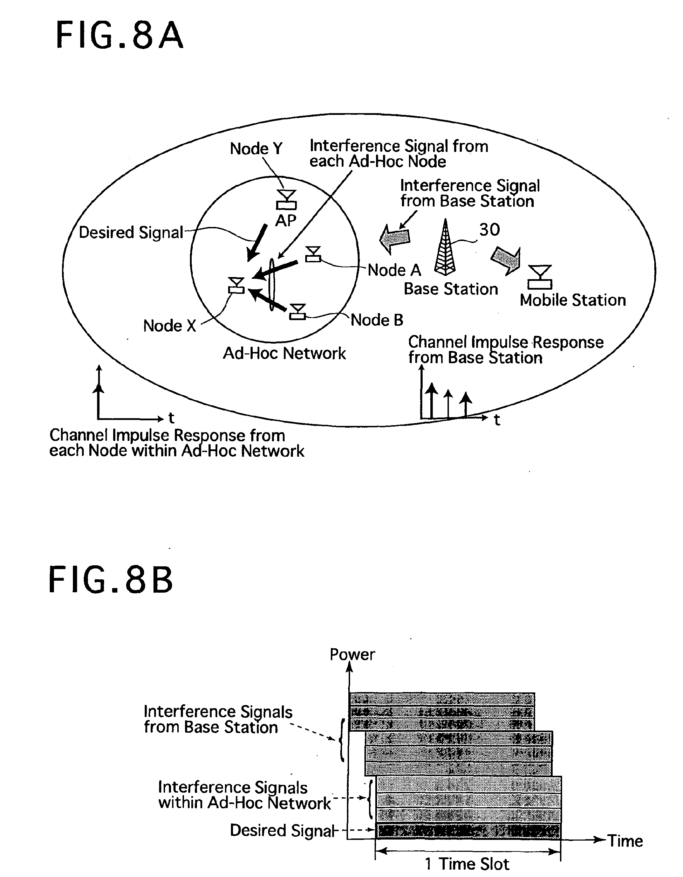

Furthermore, the node X performs processing for removing interference signals other than a desired signal transmitted from the node Y when communicating with the node Y. The interference signals to be removed are different in the uplink and the downlink of the mobile communication network. That is, in the downlink, interference signals are constituted by transmit signals from respective nodes (the radio communication apparatuses 10 and 20) within the ad-hoc network and a transmit signal from the base station 30, as shown in FIG. 8A. In this case, the communication distance is relatively short, so that a multipath is difficult to occur, and therefore, a channel impulse response to the transmit signal from each node within the ad-hoc network has a tendency to exhibit flat fading. To the contrary, the communication distance of a transmit signal from the base station 30 is longer compared to the distance between nodes within the ad-hoc network, and therefore, its channel impulse response exhibits multipath fading. As a result, receive signals of the node X in the downlink are as shown in FIG. 8B, for example.

In removing such interference signals in the downlink, channel estimates of a signal from the communication-counterpart node Y (a desired signal), signals from other nodes (for example, nodes A and B) within the ad-hoc network and signals from the base station 30 are determined first, based on a midamble included in the receive signal.

Then, signals to be removed are selected as interference signals. In this case, since the signals from the base station 30 are signals having a multipath phasing characteristic as described above, they are targeted to be removed as an interference signal. Meanwhile, the signals from other nodes within the ad-hoc network are excluded from removal targets if the orthogonality between spreading codes is kept. However, if synchronization has been broken and the orthogonality has been corrupted, then such a signal is targeted to be removed as an interference signal. When the scale of an ad-hoc network is large, the delay spread of a signal from a node existing far away is relatively large, and therefore, there is a possibility that a delay wave the length of which exceeds the length of a spreading code may arrive together with a direct wave. In this case, similarly to the signal from the base station 30, multipath fading occurs and, therefore, interference between paths occurs, so that the signal is targeted to be removed as an interference signal.

Then, by performing joint detection with the use of channel estimates and spreading codes of the selected interference signals and the desired signal, the interference signals are removed. As a result, the SIR increases, and the receiving characteristics are improved.

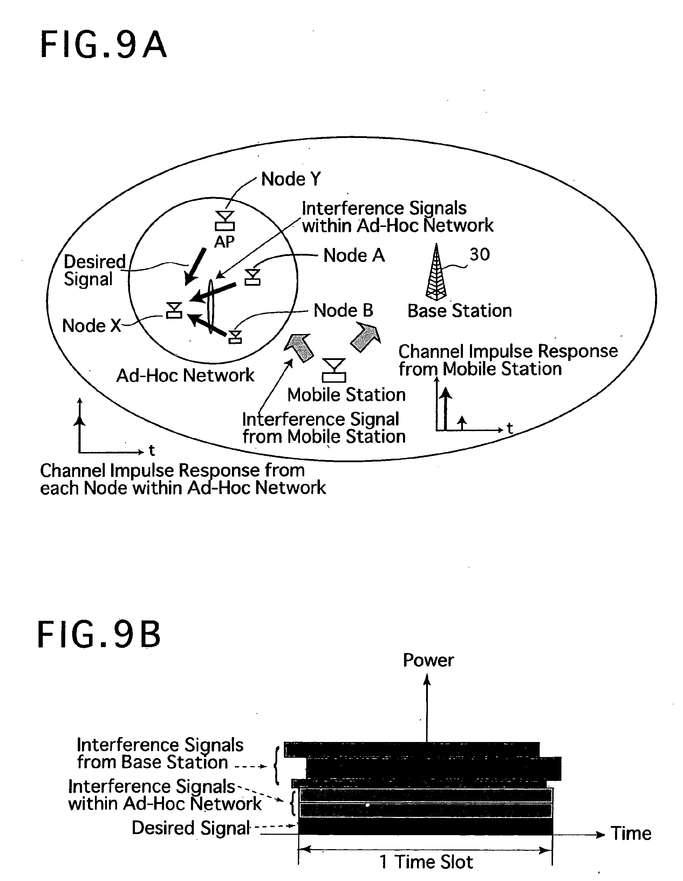

On the other hand, in the uplink, interference signals are constituted by transmit signals from respective nodes in the ad-hoc network and a transmit signal from a mobile station in the mobile communication network. In this case, the communication distance is relatively short, so that a multipath is difficult to occur, and therefore, a channel impulse response to the transmit signal from each node within the ad-hoc network has a tendency to exhibit flat fading. To the contrary, the channel impulse response of the transmit signal from the mobile station exhibits flat fading or multipath fading depending on the communication distance. However, since the transmit power of the mobile station is relatively small compared to the transmit power of the base station 30, the propagation distance of a transmit signal of the mobile station is shorter than that of a transmit signal of the base station 30. The receive signals of the node X in the uplink are as shown in FIG. 9B.

In removing such interference signals in the uplink, channel estimates of a signal from the communication-counterpart node Y (a desired signal), signals from other nodes (for example, nodes A and B) within the ad-hoc network and signals from the mobile station in the mobile communication network are determined first, based on amidamble included in the receive signal.

Then, signals to be removed are selected as interference signals, similarly to the case of the downlink. In this case, the signals from other nodes within the ad-hoc network are excluded from removal targets if the orthogonality between spreading codes is kept. However, if synchronization has been broken and the orthogonality is in a bad condition, or if the scale of the ad-hoc network is large and the amount of delay exceeds a predetermined amount (one chip), then such a signal is an interference signal and is targeted to be removed. Meanwhile, the signals from the mobile station in the mobile communication network has a fading characteristic different from that of the signals from other nodes within the ad-hoc network. That is, the signals may have a flat fading characteristic or may have a multipath fading characteristic depending on the communication distance or the communication environment. However, all of these signals are interference signals because they are different in propagation time and are not synchronized, and therefore, they are targeted to be removed.

After selecting interference signals as described above, the interference signals are removed by performing joint detection with the use of channel estimates and spreading codes of the interference signals and the desired signal. As a result, SIR increases, and deterioration of receiving characteristics can be prevented.

As described above, according to this second embodiment, a common TDD-CDMA system is adopted and the same frequency band is used for communication in an ad-hoc network and in a mobile communication network, similarly to the first embodiment described above, and thereby, it is possible to provide a radio communication apparatus 10 capable of connecting to both of the ad-hoc network and the mobile communication network, in a simple configuration and at a low cost.

Furthermore, interference signals included in receive signals, other than a desired signal, are removed in performing communication in the ad-hoc network, and thereby, it is possible to suppress deterioration of receiving characteristics due to the interference signals and avoid reduction in the communication capacity of the entire network, even in the case of adopting a common TDD-CDMA system and using the same frequency band for communication in the ad-hoc network and in the mobile communication network.

Furthermore, the power of the interference signals is measured for each of time slots specified for the uplink and the downlink transmission of the mobile communication network; and time slots with less public interference power are selected as time slots to be used for communication in the ad-hoc network based on the measured values, and transmit power control is performed based on the measured values. Thereby, interference is more difficult to occur between the ad-hoc network and the mobile communication network, and preferable communication condition can be secured regardless of which network is used.

Furthermore, by the radio communication apparatuses 10 and 20 within the ad-hoc network mutually communicating with one another, the load imposed on the mobile communication network can be reduced, and thereby it is possible to enhance the communication efficiency of the entire network and increase the communication capacity of the network. Furthermore, a common TDD-CDMA system is used for communication in the ad-hoc network and in the mobile communication network, and thereby it is possible to smoothly perform handover between the networks.

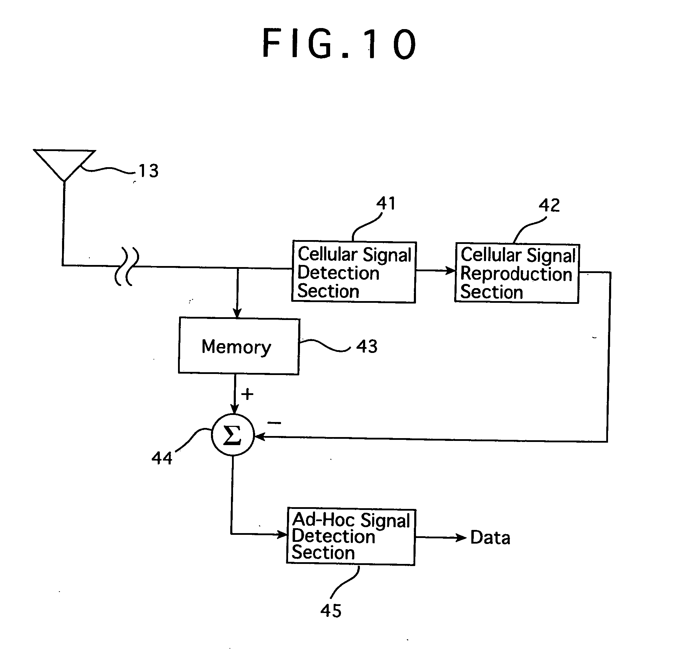

In the case of constructing an ad-hoc network in an area strongly interfered by a mobile communication network, it is also possible to adopt the configuration as shown in FIG. 10 as means for removing interference signals. This means for removing interference signals comprises, as shown in FIG. 10, a cellular signal detection section 41 for determining data and a channel impulse response of a signal from a base station or a mobile station in a mobile communication network (hereinafter referred to as a cellular-user signal), a cellular signal reproduction section 42 for generating a replica of a cellular-user signal using the data and the channel impulse response of the cellular-user signal, a memory 43 for temporarily storing receive signals, an arithmetic operation section 44 for performing arithmetic operation processing for subtracting the replica of the cellular-user signal from the receive signals, and an ad-hoc signal detection section 45 for detecting a desired signal from the receive signals from which the cellular-user signal has been removed.

In this means for removing interference signals, receive signals are inputted into each of the cellular signal detection section 41 and the memory 43 first. In the cellular signal detection section 41, only a cellular-user signal is detected from the receive signals with the use of joint detection, and processing for determining the data and the channel impulse response of the cellular-user signal is performed. Then, in the cellular signal reproduction section 42, processing for generating a replica of the cellular-user signal is performed with the use of the data and the channel impulse response of the cellular-user signal received from the cellular signal detection section 41.

After that, the receive signals are inputted into the arithmetic operation section 44 from the memory 43, and the replica of cellular-user signal is inputted into the arithmetic operation section 44 from the cellular signal reproduction section 42. In the arithmetic operation section 44, processing for removing interference signals from the mobile communication network is performed by subtracting the replica of cellular-user signal from the receive signals. Then, in the ad-hoc signal detection section 45, processing for detecting a desired signal (a signal from an intended node within the ad-hoc network) from the receive signals from which the cellular-user signal has been removed is performed. In this case, since signals from respective nodes within the ad-hoc network (ad-hoc user signals) are influenced mainly by flat fading, data can be detected by a common demodulation method. However, in the case where synchronization is not kept and in the case of a user signal received via multipath, data is detected with the use of joint detection. As a result, a desired ad-hoc user signal with minimal interference by the mobile communication network can be obtained.

By this means for removing interference signals, it is possible to significantly suppress influence by interference even in an area strongly interfered by the mobile communication network. Therefore, for example, in the case of assigning different scrambling codes in a mobile communication network and an ad-hoc network, in a radio communication system for performing spreading with the use of a scrambling code and a channelization code, the same channelization code used in the mobile communication network can be assigned to a communication channel within the ad-hoc network, and therefore all the channelization codes can be used for communication within the ad-hoc network. Consequently, it is possible to significantly increase the communication capacity of the entire ad-hoc network.

[Third embodiment]

In the second embodiment described above, either time slots specified for the uplink transmission of a mobile communication network or time slots specified for the downlink transmission thereof are selected as time slots to be used for communication in an ad-hoc network (hereinafter referred to as time slots for ad-hoc communication) based on comparison of them. In this third embodiment, however, time slots which satisfy a predetermined condition are selected as the time slots for ad-hoc communication.

Specifically, when communication is performed between nodes constituting an ad-hoc network, a radio communication apparatus (a master) which manages the entire ad-hoc network measures, in assigning communication a channel, measures the power (interference power) of each of interference signals (signals from a mobile station in the mobile communication network, and signals from the base station 30), for each of time slots specified for the uplink and the downlink transmission of the mobile communication network, and compares the measured values with a threshold set in advance to determine whether the interference power in each of the time slots is equal to or below the threshold. If, as a result of the determination, the interference power of a time slot specified for the uplink transmission is equal to or below the threshold, then the time slot specified for the downlink transmission is assigned as a time slot for ad-hoc communication. Meanwhile, if the interference power of a time slot specified for the uplink exceeds the threshold, then processing for excluding the time slot specified for the downlink transmission from time slot for ad-hoc communication is performed. If, as a result of the determination, the interference power of a time slot specified for the downlink transmission is equal to or below the threshold, then the time slot specified for the uplink transmission is assigned as a time slot for ad-hoc communication. Meanwhile, if the interference power of a time slot specified for the down link exceeds the threshold, then processing for excluding the time slot specified for the uplink transmission from time slots for ad-hoc communication is performed.

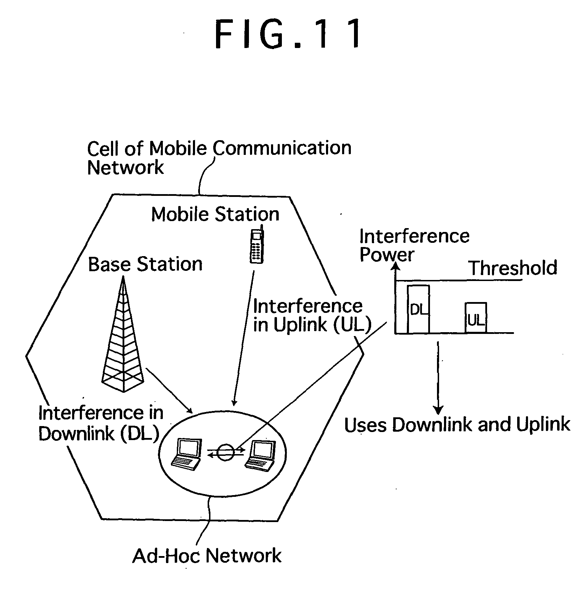

As a result, for example, if the interference power in a time slot specified for the uplink of the mobile communication network is equal to or below the threshold, and the interference power in the time slot specified for the downlink is equal to or below the threshold, as shown in FIG. 11, then both of the time slots for the downlink and the uplink transmission are assigned as the time slots for ad-hoc communication.

In this case, since the interference power depends on distance (that is, as the distance is shorter, the interference power is larger), it is possible for a radio communication apparatus constituting the ad-hoc network to estimate the distance to the mobile station based on the interference power in the uplink and estimate the distance to the base station based on the interference power in the downlink.

Meanwhile, if the distance between the ad-hoc network and the mobile station is short, interference which the mobile station receives from the ad-hoc network is large in the downlink; and if the distance between the ad-hoc network and the base station is short, interference which the base station receives from the ad-hoc network is large in the uplink.

Accordingly, if the interference power in the time slots specified for the uplink is estimated to be equal to or below the threshold, and the ad-hoc network and the mobile station are estimated to be separated by a predetermined distance, then it is possible to reduce influence given to the mobile station by communication within the ad-hoc network by using the time slots specified for the downlink for communication within the ad-hoc network. Similarly, if the interference power in the time slots specified for the downlink is estimated to be equal to or below the threshold, and the ad-hoc network and the base station are estimated to be separated by a predetermined distance, then it is possible to reduce influence given to the base station by communication within the ad-hoc network by using the time slots specified for the uplink for communication within the ad-hoc network.

The above-described threshold is set in advance to such a value that communication performed within the ad-hoc network does not influence other radio communication apparatuses outside the ad-hoc network. For example, this threshold may be determined based on the reliability required of a system, a bit rate, the number of users who use the system, and the like. The threshold may be stored in advance in a radio communication apparatus to be a master, or a radio communication apparatus set as a master may acquire information necessary for determining the threshold from the base station and update the threshold as appropriate. The same value may be used for the uplink and the downlink as the threshold, or different values may be used depending on difference in performance or the like required of each link.

According to this third embodiment, the power of interference signals is measured for each of time slots specified for the uplink and the downlink transmission of a mobile communication network, and time slots to be used for communication in an ad-hoc network are individually determined by comparing the measured values and a threshold set in advance. Thereby, it is possible to use the time slots for both of the uplink and the downlink at the maximum for communication within the ad-hoc network and, therefore, to significantly enhance the communication efficiency within the ad-hoc network in comparison with the case of selecting either time slots for the uplink or time slots for the downlink of a mobile communication network as time slots for ad-hoc communication as in the second embodiment. Generally, as for the ratio of the uplink and the downlink per frame of TDD-CDMA in a mobile communication network, the rate of the downlink is larger in most cases. For example, if only the uplink is used for communication in an ad-hoc network, there is presented a problem of significant decrease in the transmission rate in communication within the ad-hoc network. According to the third embodiment, however, both of the uplink and the downlink can be used, so that the above problem rarely occurs, and communication within the ad-hoc network can be performed efficiently.

[Fourth embodiment]

Next, a fourth embodiment of the present invention will be described. Components similar to those shown in the first to third embodiments are given the same reference numerals, and description thereof will be simplified.

A first radio communication apparatus 10 has a transmitter 11, a receiver 12, an antenna 13, a control section 14 and a storage section 15 similarly to the first to third embodiments.

In this fourth embodiment, the control section 14 is adapted to function as priority setting means and communication channel assignment means according to the present invention when the first radio communication apparatus 10 is set as a master in an ad-hoc network. Specifically, the control section 14 performs processing for selecting communication channels which can be dynamically assigned to communication within the ad-hoc network, from among all connection channels stored in the storage section 15 in advance, and setting assignment priority for the selected communication channels based on a predetermined evaluation criterion related to communication conditions. When assignment of a communication channel is requested by a slave, the control section 14 performs processing for assigning a communication channel based on the assignment priority and notifying the communication channel to the slave. That is, in this embodiment, a communication channel assignment apparatus according to the present invention is configured by the control section 14.

Next, description will be made on processing for connecting to an ad-hoc network to be performed by the first radio communication apparatus 10. Here, description will be made on the assumption that the first radio communication apparatus 10 is a node X.

This processing is started, for example, when the SIR (signal to interference ratio) of an ad-hoc network is stronger than that of a mobile communication network or when the communication mode is switched to an ad-hoc mode.

First, the node X performs processing for searching whether or not there is a master in an ad-hoc network and setting own node type to any of master and slave based on the search result. That is, the node X performs processing for detecting a pilot signal originated from a master. As a result, if the pilot signal can be detected, the node type of the node X is set to slave; and if the pilot signal cannot be detected, the node type of the node X is set to master.

Here, if the node type of the node X is set to slave, the node X performs processing for transmitting node information (for example, the ID and the address of the node X) to the master with the use of a common channel set in advance. When receiving the node information about the node X, the master updates network information (node information about each slave, network resources, parameters of QoS and the like) in its storage section based on the node information received from the node X, and then performs processing for delivering the network information to each slave (including the node X) within the ad-hoc network. Thereby, the node X is incorporated in the ad-hoc network as a slave.

On the other hand, if the node type of the node X is set to master, the node X repeatedly originates a pilot signal in a predetermined cycle,and periodically performsprocessing for updating the network information and processing for detecting the communication condition of slaves while monitoring control signals outputted from the slaves. Thereby, an ad-hoc network in which the node X is a master is constructed, and maintenance and management of the ad-hoc network is performed by the node X.

Next, description will be made on processing to be performed when communication is made between nodes within the ad-hoc network constructed as described above. For example, in the case where the node X is set as a slave, when the node X starts communication with another radio communication apparatus (hereinafter referred to as a node Y) set as a slave, the node X first performs processing for specifying the ID of the node Y and transmitting a communication channel assignment request to a master with the use of a common channel. On receiving the request, the master refers to network information in its storage section to check the communication condition of the node Y and performs processing for assigning a communication channel between the nodes X and Y.

Specifically, first, communication channels which can be newly assigned to communication between the nodes X and Y (communication channels which have not been assigned, among communication channels which can be dynamically assigned to communication within the ad-hoc network) are selected from among all communication channels (combinations of a time slot and a spreading code) registered in advance. Then, after performing processing for setting assignment priority for the selected communication channels based on a predetermined evaluation criterion related to communication conditions, processing for assigning a communication channel to be used for communication between the nodes X and Y is performed based on the assignment priority.

Here, network resources to be assigned as a communication channel include time slots and spreading codes. The time slots are obtained by dividing a TDD-CDMA radio frame into multiple portions, and fifteen time slots (ST1 to ST15) are provided here. As the spreading codes, two kinds of spreading codes, a scrambling code and a channelization code, are used.

The scrambling code is an identification code assigned to each cell of a mobile communication network, and a code different from the code assigned to each cell is given as an identification code common in ad-hoc networks. Meanwhile, OVSF (orthogonal variable spreading factor) codes with a spreading ratio of 16 are used as the channelization codes to be used within the ad-hoc network. As the channelization codes, there are included a channelization code secured in advance as a fixed code for a control signal (for example, a pilot signal, a synchronization signal, a channel assignment request signal and the like) to be exchanged between a master and a slave, and a channelization code which can be freely used for a data signal to be exchanged between nodes. In this embodiment, C0 is used to denote the channelization code for a control signal; C1 to C15 are used to denote the channelization codes for a data signal;

and the channelization codes C1 to C15 are used as spreading codes which can be dynamically assigned to communication within the ad-hoc network.

As the predetermined evaluation criterion related to communication conditions, for example, evaluation criteria related to interference condition, a network configuration, load condition and the like are included. Here, the interference level in each time slot is used as the evaluation criterion related to interference condition. That is, a master measures the interference level in each time slot of TDD-CDMA, and determines assignment priority so that a communication channel with a lower interference level is given higher priority.

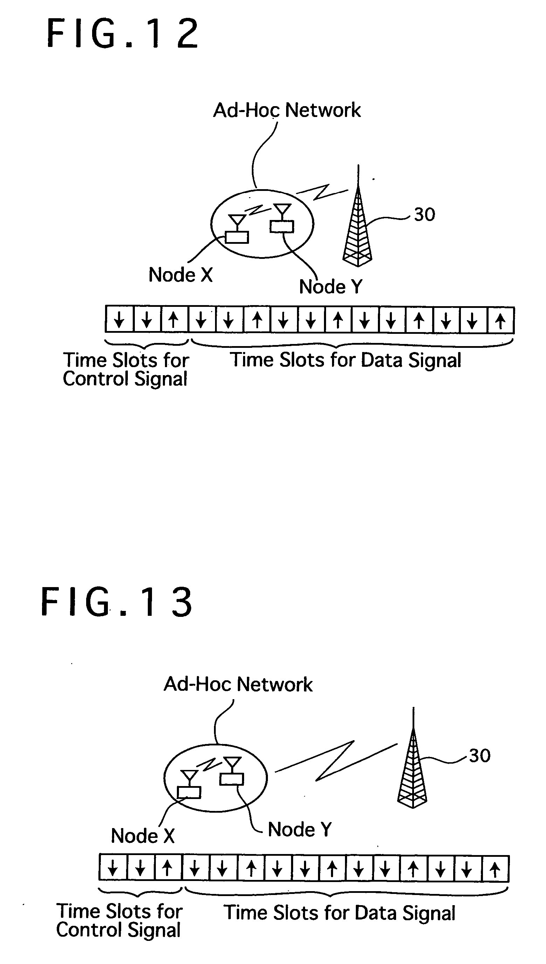

For example, when an ad-hoc network is constructed near a base station 30 in a mobile communication network as shown in FIG. 12, the interference level is apt to be higher in time slots specified for the downlink transmission of the mobile communication network and relatively lower in time slots specified for the uplink transmission. To the contrary, when an ad-hoc network is constructed far away from the base station 30 as shown in FIG. 13, the interference level is apt to be higher in time slots specified for the uplink transmission of the mobile communication network and relatively lower in time slots specified for the downlink transmission.

Accordingly, if the interference level of the time slots used as the uplink transmission of the mobile communication network is low as in FIG. 12, the priority of a communication channel using the time slots corresponding to the uplink (time slots with upward arrows in the figure) is relatively higher, and in the example in FIG. 12, the time slots ST6, ST9, ST12 and ST15 are set higher in the priority. On the other hand, if the interference level of the time slots used as the downlink transmission of the mobile communication network is low as in FIG. 13, the priority of a communication channel using the time slots corresponding to the downlink (time slots with downward arrows in the figure) is relatively higher, and in the example of in FIG. 13, the time slots ST4, ST5, ST7, ST8, ST10, ST11, ST13 and ST14 are set higher in the priority. Therefore, time slots assigned to communication within the ad-hoc network dynamically change depending on the position of the ad-hoc network in the cell, the link direction of the mobile communication network and the like. In this embodiment, the time slots (ST1, ST2 and ST3) to be used for exchange of a control signal in the mobile communication network, such as for BH (a broadcast channel) and FA (a forward access channel), are not used for communication in the ad-hoc network. Furthermore, in this embodiment, it is assumed that ad-hoc networks are sufficiently far away from one another and no mutual interference occurs.

As the evaluation criterion related to a network configuration, there is included a criterion in which a communication channel to be assigned, for example, (1) a communication channel used for two-way communication or (2) a communication channel assigned when one node communicates with multiple nodes, is differentiated based on whether it satisfies a particular condition.

For example, if assignment of a communication channel is requested by the node X, it is necessary to assign a communication channel to each of the uplink (X→Y) and the downlink (Y→X). In this case, a master preferentially assigns a pair of communication channels with the same spreading code and different time slots as communication channels to be used for two-way communication, and the nodes X and Y perform processing for suppressing or removing interference signals within the ad-hoc network by means of joint detection, in this embodiment. The number of channelization codes which can be used at the same time in a time slot is ten to twelve at the maximum. It is desirable, however, to collectively assign the channelization codes to as few time slots as possible. For example, it is preferable to, after the number of channelization codes reaches the upper limit, assign a channelization code to another time slot.

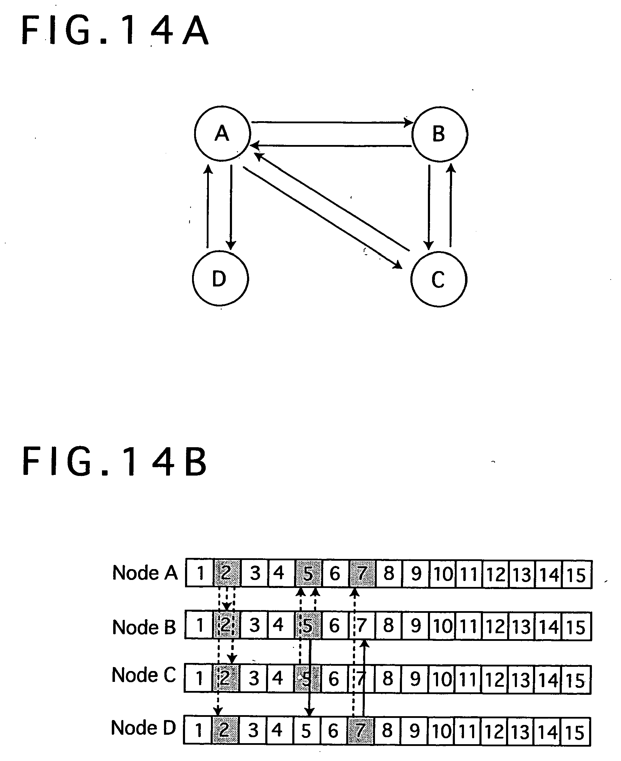

Further, when any node within the ad-hoc network communicates with multiple nodes as shown in FIG. 14A, the number of time slots used by each node is controlled to be minimized by preferentially assigning communication channels with the same time slots and with different spreading codes as the communication channels. That is, the load on joint detection processing increases depending on the number of time slots used by each radio communication apparatus , irrespective of the number of spreading codes used by each time slot, and therefore, when a node communicates with multiple nodes, the number of time slots used by each node is suppressed by using different channelization codes for the same time slot to multiplex traffic. For example, if a node A attempts to communicate with nodes B, C and D while nodes B and D communicate with each other using the time slots ST5 and ST7 as shown in FIG. 14A, all communication channels required for communication between the nodes (A→B, B→A, A→C, C→A, A→D and D→A) can be assigned with the use of the time slots ST2, ST5, and ST7 as shown in FIG. 14B, so that the number of time slots to be used can be minimized.

After setting the priority and assigning communication channels as described above, the master performs processing for replying setting information in which assignment of communication channels is specified to the node X which has transmitted the communication request. In this case, the master also performs processing for updating the network information based on the setting information and storing it in its storage section and processing for delivering the updated network information to each slave within the ad-hoc network.

When receiving the setting information required for communication with the node Y, the node X stores the setting information in the storage section 15 and then performs transmitting/receiving of data signals directly with the node Y in accordance with the setting information. In this case, the node X performs power control in order not to interfere with radio communication apparatuses in its vicinity which are not participating in the ad-hoc network. That is, the interference levels of all time slots are measured based on the receive signals inputted into the receiver 12; the sum of the measured values and an offset value determined in advance is set as the maximum value (a tolerance value) ; and transmit power control is performed so that the maximum value is not exceeded. The node X receives a signal from the base station 30 and obtains information for synchronization included in a predetermined time slot of the received signal. The node X then performs processing for setting a timing of communication with the node Y so that it corresponds to the communication timing in the mobile communication network, based on the information for synchronization, processing for determining channel estimates of a desired signal transmitted from the node Y and other interference signals based on a midamble included in the receive signals and removing the interference signals by means of joint detection, with the use of the channel estimates and spreading codes assigned to respective signals, and the like.

For example, when NAK (negative acknowledge) is transmitted from the node Y to the node X, or from the node X to the node Y while communication is being performed between the nodes X and Y, the master performs processing for relaying data signals exchanged between the node Y and the node X. That is, after assigning a communication channel between the master itself and the node X and a communication channel between the master itself and the node Y, the master performs processing for using the communication channels to acquire a data signal from the node X or the node Y and transfer it to the node Y or the node X. Thus, the master can be used as a relay apparatus in the ad-hoc network, and as a result, the applicable range of the ad-hoc network can be enlarged.

The master also periodically inquires of the nodes X and Y about the communication condition, and it releases the communication channel assigned to communication between the nodes X and Y after confirming completion of communication between the nodes X and Y from a response to the inquiry. After that, the master performs processing for updating the network information and storing it in its storage section and processing for delivering the updated network information to each slave within the ad-hoc network.

As described above, according to this fourth embodiment, communication channels which can be dynamically assigned to communication within an ad-hoc network are selected from among all communication channels registered in advance; assignment priority is set for the selected communication channels based on a predetermined evaluation criterion related to communication conditions; and a communication channel is assigned based on the assignment priority when assignment of a communication channel is requested. Thereby, even under a network environment in which an ad-hoc network and a mobile communication network co-exist, it is possible to assign a communication channel based on communication conditions (for example, a network configuration, load condition, interference condition and the like), and therefore, it is possible to enhance efficiency and optimization of communication in the ad-hoc network. Furthermore, as a predetermined evaluation criterion related to communication conditions, the interference level in each of TDD-CDMA time slots is measured, and the assignment priority is set so that a communication channel with a lower interference level is given a higher priority. Thereby, even when a common TDD-CDMA system is adopted and the same frequency band is used for communication in the ad-hoc network and in the mobile communication network, mutual interference between the networks can be suppressed, and therefore, it is possible to secure a favorable communication condition and avoid reduction in throughput or communication capacity.

In each of the above embodiments, a common TDD-CDMA system is adopted and the same frequency band is used for communication within an ad-hoc network and communication between a base station and a mobile station in a mobile communication network. However, the present invention is not limited thereto, and the telecommunication system to be used in an ad-hoc network and in a mobile communication network may be any common TDD-based telecommunication system, and a TDD-TDMA system or a TDD-OFDM system may be used, for example.

TDD-TDMA is TDMA (Time Division Multiple Access) in which a TDD mode is used as a duplex mode, and TDMA is a multiple access system in which the same frequency band is shared by multiple transmitters for a short time in turn. As an example of adoption of this TDD-TDMA, there is PHS (personal handyphone system) , for example. The TDD-OFDM system is OFDM (Orthogonal Frequency Division Multiplexing) in which a TDD mode is used as a duplex mode, and OFDM is a transmission system in which multiple carrier waves are arranged for each frequency interval so that spectrums are orthogonal with each other. In this transmission system, one or multiple carrier waves are assigned to each transmitter.

Industrial Applicability

According to the present invention, a common TDD-CDMA system is adopted and the same frequency band is used for communication in an ad-hoc network and in a mobile communication network, so that it is possible to provide a radio communication apparatus capable of connecting to both of the ad-hoc network and the mobile communication network, in a simple configuration and at a low cost. It is also possible to reduce mutual interference between the ad-hoc network and the mobile communication network, and secure favorable communication condition regardless of which network is used.

**Claims**

1. A radio communication apparatus which uses a TDD-CDMA system for communication with a base station in a mobile communication network, the radio communication apparatus comprising:

   ad-hoc communication means for constructing an ad-hoc network with other radio communication apparatuses existing therearound to wirelessly communicate with the said other radio communication apparatuses; wherein the ad-hoc communication means uses a TDD-CDMA system common to the mobile communication network when communicating with the said other radio communication apparatuses.

2. The radio communication apparatus according to claim 1, wherein the ad-hoc communication means performs processing for detecting existence of radio communication apparatuses therearound which are capable of constructing the ad-hoc network, acquiring from each of the radio communication apparatuses information thereabout, and storing the information in storage means, then obtains information about an intended radio communication apparatus from among the information stored in the storage means, and communicates with the intended radio communication apparatus within the ad-hoc network based on the obtained information.

3. The radio communication apparatus according to claim 1,
   wherein the ad-hoc communication means measures an interference level based on a receive signal and performs transmit power control based on the measured value.

4. The radio communication apparatus according to claim 1, wherein the ad-hoc communication means performs communication within the ad-hoc network with the use of time slots specified for the downlink transmission of the mobile communication network.

5. A radio communication method used in constructing an ad-hoc network by multiple radio communication apparatuses, the radio communication method comprising:

   the step of adopting a TDD-CDMA system common to communication in a mobile communication network and using the same frequency band as that of the mobile communication network, for communication within the ad-hoc network.

6. A radio communication apparatus which uses a TDD-CDMA system for communication with a base station in a mobile communication network, the radio communication apparatus comprising:

   ad-hoc communication means for constructing an ad-hoc network with other radio communication apparatuses existing therearound to wirelessly communicate with the said other radio communication apparatuses; wherein the ad-hoc communication means adopts a TDD-CDMA system common to the mobile communication network and uses the same frequency band as that of the mobile communication network when communicating with the said other radio communication apparatuses within the ad-hoc network, and synchronizes with the communication in the mobile communication network to communicate with the said other radio communication apparatuses within the ad-hoc network.

7. The radio communication apparatus according to claim 6, wherein the ad-hoc communication means performs processing for detecting radio communication apparatuses therearound which are capable of constructing the ad-hoc network, acquiring from each of the radio communication apparatuses information thereabout, and storing the information in storage means, then obtains information about an intended radio communication apparatus from among the information stored in the storage means, and communicates with the intended radio communication apparatus within the ad-hoc network based on the obtained information.

8. The radio communication apparatus according to claim 6, wherein the ad-hoc communication means is configured to synchronize with the communication in the mobile communication network based on information for synchronization received from the base station.

9. A radio communication method used in constructing an ad-hoc network by multiple radio communication apparatuses, the radio communication method comprising:

   the step of adopting a TDD-CDMA system common to communication in a mobile communication network and using the same frequency band as that of the mobile communication network, for communication within the ad-hoc network, and synchronizing with the communication in the mobile communication network to perform the communication within the ad-hoc network.

10. A radio communication apparatus which communicates with a base station in a mobile communication network with use of a TDD-CDMA system as a mobile station of the mobile communication network, the radio communication apparatus comprising:

ad-hoc communication means for constructing an ad-hoc network with other radio communication apparatuses existing therearound to wirelessly communicate with the said other radio communication apparatuses; wherein the ad-hoc communication means adopts a TDD-CDMA system common to the mobile communication network and uses the same frequency band as that of the mobile communication network in communication with the said other radio communication apparatuses in the ad-hoc network, and uses, in the communication area of each base station of the mobile communication network, a spreading code orthogonal with a spreading code used for communication with the base station, for communication within the ad-hoc network.

11. The radio communication apparatus according to claim 10, wherein
the spreading code is configured by combination of a scrambling code and a channelization code constituted by an orthogonal variable spreading factor code; and
the ad-hoc communication means uses, in the communication area of each base station, a scrambling code orthogonal with a scrambling code used for communication with the base station, for communication within the ad-hoc network.

12. The radio communication apparatus according to claim 11, wherein:

on the assumption that, in the communication area of each base station, the scrambling code used for communication with the base station is denoted by Sc; the scrambling code used within the ad-hoc network is denoted by Sa; a binary scrambling code to be a basis for the scrambling code Sc is denoted by v; and the code length of the scrambling codes Sc, Sa and v is denoted by Qs;
the binary scrambling code v is a binary code the elements $v_k$ (k=1, ..., Qs) of which are {1, -1};
elements $Sc_k$ of the scrambling code Sc are derived from the following formula:

[Formula 1]

$$Sc_k = \exp\left(j\left(k\frac{\pi}{2} + l\pi\right)\right)$$

(where, j is equal to $\sqrt{-1}$ ; and 1 is 0 when $v_k$=1, and l is 1 when $v_k$=-1); and
elements $Sa_k$ of the scrambling code Sa are derived from the following formula:

[Formula 2]

$$Sa_k = \exp\left(j\left(\frac{2\pi k}{Qs} + l\pi\right)\right)$$

13. The radio communication apparatus according to claim 10, wherein the ad-hoc communication means synchronizes with communication in the mobile communication network to communicate with the said other radio communication apparatuses within the ad-hoc network.

14. A radio communication apparatus which uses a TDD-CDMA system for communication with a base station in a mobile communication network, the radio communication apparatus comprising:

ad-hoc communication means for constructing an ad-hoc network with other radio communication apparatuses existing therearound to wirelessly communicate with the said other radio communication apparatuses; wherein the ad-hoc communication means adopts a TDD-CDMA system common to the mobile communication network and uses the same frequency band as that of the mobile communication network when communicating with the said other radio communication apparatuses, and comprises interference signal removal means for removing interference signals other than a desired signal transmitted from the said other radio communication apparatuses.

15. The radio communication apparatus according to claim 14, wherein the interference signal removal means determines channel estimates of the desired signal and the interference signals from a known signal included in receive signals, and removes the interference signals by means of joint detection with the use of the channel estimates and a spreading code assigned to each radio communication apparatus.

16. The radio communication apparatus according to claim 14, wherein the interference signal removal means performs processing for generating replicas of the interference signals and subtracting the replicas from the receive signals to remove the interference signals.

17. The radio communication apparatus according to claim 14, wherein the interference signals include signals from the base station or a mobile station in the mobile communication network.

18. The radio communication apparatus according to claim 14, wherein the interference signals include signals which are not in synchronization with the desired signal among signals exchanged through communication within the ad-hoc network.

19. A radio communication apparatus which uses a TDD-CDMA system for communication with a base station in a mobile communication network, the radio communication apparatus comprising:

ad-hoc communication means for constructing an ad-hoc network with other radio communication apparatuses existing therearound to wirelessly communicate with the said other radio communication apparatuses; wherein the ad-hoc communication means adopts a TDD-CDMA system common to the mobile communication network and uses the same frequency band as that of the mobile communication network when communicating with the said other radio communication apparatuses, and measures the power of interference signals for each of time slots specified for the uplink and the downlink transmission of the mobile communication network to select time slots to be used for communication within the ad-hoc network based on the measured values.

20. The radio communication apparatus according to claim 19, wherein the ad-hoc communication means performs transmit power control based on the measured values of the interference signals.

21. The radio communication apparatus according to claim 19, wherein the ad-hoc communication means measures the power of interference signals for each of time slots specified for the uplink and the downlink transmission of the mobile communication network, and determines time slots to be used for communication within the ad-hoc network based on comparison of the measured values with a predetermined threshold.

22. The radio communication apparatus according to claim 21, wherein the ad-hoc communication means uses the time slots specified for the downlink transmission of the mobile communication network for communication within the ad-hoc network if the power of interference signals in the time slots specified for the uplink transmission of the mobile communication network is equal to or below the threshold, and uses the time slots specified for the uplink transmission of the mobile communication network for communication within the ad-hoc network if the power of interference signals in the time slots specified for the downlink transmission is equal to or below the threshold.

23. The radio communication apparatus according to claim 22, wherein, if the power of interference signals in the time slots specified for the uplink transmission of the mobile communication network is equal to or below the threshold and the power of interference signals in the time slots specified for the downlink transmission is equal to or below the threshold, the ad-hoc communication means uses both of the time slots specified for the downlink transmission and the time slots specified for the uplink transmission of the mobile communication network for communication within the ad-hoc network.

24. A method for assigning a communication channel specified by TDD-CDMA time slots and spreading codes to a radio communication apparatus which adopts a common TDD-CDMA system and uses the same frequency band for communication in an ad-hoc network and in mobile communication network, as a communication channel to be used for communication within the ad-hoc network, the method comprising the steps of:

on the assumption that, among multiple radio communication apparatuses constituting the ad-hoc network, a radio communication apparatus managing the entire network is a master, and a radio communication apparatus performing communication under the control of the master is a slave,
the master selecting communication channels to be dynamically assigned to communication within the ad-hoc network, from among all communication channels registered in advance, and setting assignment priority for the selected communication channels based on a predetermined evaluation criterion related to communication conditions; and
the master assigning a communication channel based on the assignment priority when assignment of a communication channel is requested by the slave and notifying the communication channel to the slave.

25. The communication channel assignment method according to claim 24, wherein the master measures an interference level in each TDD-CDMA time slot as the predetermined evaluation criterion related to communication conditions, and sets the assignment priority so that a communication channel with a lower interference level is given a higher priority.

26. The communication channel assignment method according to claim 25, wherein the master preferentially assigns communication channels with the same time slot and with different spreading codes, when assigning multiple communication channels to communication within the ad-hoc network.

27. The communication channel assignment method according to claim 24, wherein the master preferentially assigns a pair of communication channels with the same spreading code and for different time slots as communication channels to be used for two-way communication, when assignment of a communication channel is requested by the slave.

28. The communication channel assignment method according to claim 24, wherein the master preferentially assigns communication channels with the same time slots and with different spreading codes as communication channels to be used for the communication, when any of the radio communication apparatuses constituting the ad-hoc network communicates with multiple radio communication apparatuses within the ad-hoc network.

29. The communication channel assignment method according to claim 24, wherein the said spreading codes are configured by combination of a scrambling code specific to the ad-hoc network and channelization codes constituted by orthogonal variable spreading factor codes;
the channelization codes include channelization codes for control signals and channelization codes for data signals; and
the channelization codes for data signals are dynamically assigned to communication within the ad-hoc network.

30. A communication channel assignment apparatus for assigning a communication channel specified by TDD-CDMA time slots and spreading codes to a radio communication apparatus which adopts a common TDD-CDMA system and uses the same frequency band for communication in an ad-hoc network and in a mobile communication network, as a communication channel to be used for communication within the ad-hoc network, the communication channel assignment apparatus comprising:

priority setting means for selecting communication channels to be dynamically assigned to communication within the ad-hoc network, from among all communication channels registered in advance, and setting assignment priority for the selected communication channels based on a predetermined evaluation criterion related to communication conditions ; and
communication channel assignment means for assigning a communication channel based on the assignment priority when assignment of a communication channel is requested by a node constituting the ad-hoc network and notifying the assigned communication channel to the node; wherein
the priority setting means measures an interference level in each TDD-CDMA time slot as the predetermined evaluation criterion related to communication conditions, and sets the priority so that a communication channel with a lower interference level is given a higher priority.

31. A radio communication apparatus which adopts a common TDD-CDMA system and uses the same frequency band for communication in an ad-hoc network and in a mobile communication network, the radio communication apparatus comprising:

a communication channel assignment apparatus for assigning a communication channel specified by TDD-CDMA time slots and spreading codes as a communication channel to be used for communication within the ad-hoc network; wherein
the communication channel assignment apparatus comprises:

priority setting means for selecting communication channels to be dynamically assigned to communication within the ad-hoc network, from among all communication channels registered in advance, and setting assignment priority for the selected communication channels based on a predetermined evaluation criterion related to communication conditions ; and
communication channel assignment means for assigning a communication channel based on the assignment priority when assignment of a communication channel is requested by a node constituting the ad-hoc network and notifying the assigned communication channel to the node; wherein
the priority settingmeans measures an interference level in each TDD-CDMA time slot as the predetermined evaluation criterion related to communication conditions, and sets the priority so that a communication channel with a lower interference level is given a higher priority.

32. A radio communication apparatus which uses any telecommunication system among a TDD-CDMA system, a TDD-TDMA system and a TDD-OFDM system for communication with a base station in a mobile communication network, the radio communication apparatus comprising:

ad-hoc communication means for constructing an ad-hoc network with other radio communication apparatuses existing therearound to wirelessly communicate with the said other radio communication apparatuses; wherein the ad-hoc communication means uses a telecommunication system common to and the same frequency band as communication with the base station of the mobile communication network when communicating with the said other radio communication apparatuses.

# FIG.1

30

LAN

Access Point

20

Headset

10

10

Mobile
Communication
Network

Mobile Phone

10

PC

20

Printer

10 PDA

20 PC

20

Mouse

# FIG.2

10

30

Time Slots for Mobile
Communication
Network

Time Slots for
Ad-Hoc Network

Synchronization
of Timing

10(20)

10(20)

Cell

# FIG. 3

# FIG.4

START

Switches to Ad-Hoc Mode — S1

Acquires Information about Radio
Communication Apparatuses in the Vicinity — S2

Selects Time Slots — S3

Synchronization Acquisition — S4

Power Control — S5

Monitors Network — S6

END

# FIG.5

1 Frame

| ↑ | ↑ | ↓ | ↑ | ↑ | ↓ | ↑ | ↑ | ● ● ● | ↓ | ↑ |

1                                              15
                                        Time Slot

| ↓ | | ↑ |
Downlink Uplink

| | | | | | | ● ● ● | | |

1                              2560  (Chip)

# FIG.6

EP 1 631 109 A1

# FIG.7

Cell of Mobile Communication
Network

Time Slots for Mobile Communication
Network

Downlink  Uplink

Interference Power by Mobile
Communication Network

Uplink

Downlink

Time Slots for Ad-Hoc Network

Mobile
Station

Interference
from Base
Station

30

Base
Station

Node X

Node Y  Ad-Hoc Network

# FIG.8A

Node Y

Interference Signal from each Ad-Hoc Node

Interference Signal from Base Station

Desired Signal

AP

30

Node A

Base Station

Mobile Station

Node X

Node B

Ad-Hoc Network

Channel Impulse Response from Base Station

t

t

Channel Impulse Response from each Node within Ad-Hoc Network

# FIG.8B

Power

Interference Signals from Base Station

Interference Signals within Ad-Hoc Network

Desired Signal

Time

1 Time Slot

# FIG.9A

Channel Impulse Response from
each Node within Ad-Hoc Network

# FIG.9B

# FIG.10

# FIG.11

Cell of Mobile Communication
Network

Mobile Station

Base Station

Interference
in Uplink (UL)

Interference in
Downlink (DL)

Interference
Power

Threshold

DL

UL

Uses Downlink and Uplink

Ad-Hoc Network

# FIG.12

Ad-Hoc Network

Node X

Node Y

30

Time Slots for Control Signal

Time Slots for Data Signal

# FIG.13

Ad-Hoc Network

Node X

Node Y

30

Time Slots for Control Signal

Time Slots for Data Signal

# FIG.14A

# FIG.14B

# FIG.15

# FIG.16

# FIG.17

10ms

| | Symmetric |
| Asymmetric 4:1 DL/UL |
| Asymmetric 14:1 DL/UL |

666μs

Time Slot for Uplink Transmission
Time Slot for Downlink Transmission

# FIG.18

LAN    Access Point

Headset

Mobile Phone

PC

PDA

Printer

PC    Mouse

## INTERNATIONAL SEARCH REPORT

| International application No. |
|---|
| PCT/JP2004/008003 |

**A. CLASSIFICATION OF SUBJECT MATTER**
Int.Cl⁷ H04Q7/38, H04J13/00, H04L12/28

According to International Patent Classification (IPC) or to both national classification and IPC

**B. FIELDS SEARCHED**

Minimum documentation searched (classification system followed by classification symbols)
Int.Cl⁷ H04B7/24-7/26, H04Q7/00-7/38, H04B7/204-7/216, H04J12/00-12/06, H04L12/28

Documentation searched other than minimum documentation to the extent that such documents are included in the fields searched
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 02/39710 A1 (STANFORTH, Peter), 16 May, 2002 (16.05.02), Page 3, line 6 to page 6, line 11; page 10, | 1,2,5,6, 8-10,13, 19-28,30-32 |
| Y | line 14 to page 11, line 7 & EP 1344386 A1 | 3,7,11,12, 14-18,29 |
| A | | 4 |
| Y | JP 11-234284 A (Ricoh Co., Ltd.), 27 August, 1999 (27.08.99), Par. No. [0018] (Family: none) | 3 |
| Y | US 2003/0091001 A1 (NEC CORP.), 15 May, 2003 (15.05.03), Par. No. [0002] & JP 2003-152786 A | 7 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 August, 2004 (27.08.04) | 14 September, 2004 (14.09.04) |

| Name and mailing address of the ISA/ Japanese Patent Office | Authorized officer |
|---|---|
| Facsimile No. | Telephone No. |

Form PCT/ISA/210 (second sheet) (January 2004)

<div style="text-align:center">**INTERNATIONAL SEARCH REPORT**</div>

| | International application No. |
|---|---|
| | PCT/JP2004/008003 |

C (Continuation). DOCUMENTS CONSIDERED TO BE RELEVANT

| Category* | Citation of document, with indication, where appropriate, of the relevant passages | Relevant to claim No. |
|---|---|---|
| Y | Yasuyuki OISHI, "W-CDMA System no Musen Hoshiki", "FUJITSU", Vol.51, No.1, 10 February, 2000 (10.02.00), pages 13 to 18 | 11,12,29 |
| Y | WO 01/73993 A1 (Matsushita Electric Industrial Co., Ltd.), 04 October, 2001 (04.10.01), Page 9, line 9 to page 10, line 13 & AU 4275301 A & JP 2001-285254 A | 14,15,17,18 |
| Y | EP 0986204 A1 (Matsushita Electric Industrial Co., Ltd.), 15 March, 2000 (15.03.00), Par. Nos. [0003] to [0010] & WO 99/44319 A1 & US 6526271 B1 | 16 |
| X | US 2002/0041584 A1 (NEC Corp.), 11 April, 2002 (11.04.02), Par. Nos. [0034] to [0036], [0134] & JP 2002-118875 A | 32 |

Form PCT/ISA/210 (continuation of second sheet) (January 2004)